# EUROPÄISCHE PATENTSCHRIFT

(11) **EP 1 656 397 B1**
(45) Veröffentlichungstag und Bekanntmachung des Hinweises auf die Patenterteilung: **28.02.2007**
(21) Anmeldenummer: 04741410.7
(22) Anmeldetag: 12.08.2004
(51) Int. Cl.: C08F 8/28, C08F 230/08, C08F 218/04, C08F 218/06, C08F 218/08, C08F 30/08, C08G 77/00, C08G 77/32

(54) **SILIKONHALTIGE POLYVINYLACETALE**
SILICONE-CONTAINING POLYVINYL ACETALS
POLYVINYLACETALS A BASE DE SILICONE

(30) Priorität: 21.08.2003 DE 10338479
(43) Veröffentlichungstag der Anmeldung: 17.05.2006
(73) Patentinhaber: Wacker Chemie AG, 81737 München (DE)
(72) Erfinder: STARK, Kurt Dr., 91365 Weilersbach (DE)
(74) Vertreter: Schuderer, Michael
(86) Internationale Anmeldenummer: PCT/EP2004/009050
(87) Internationale Veröffentlichungsnummer: WO 2005/021604

(56) Entgegenhaltungen:
- US-B1- 6 211 289

## Beschreibung

Die Erfindung betrifft silikonhaltige Polyvinylacetale, Verfahren zu deren Herstellung sowie deren Verwendung.

Polyvinylacetale sind bereits seit 1924 bekannt, wobei in der Folgezeit eine Vielzahl von Aldehyden zur Herstellung der entsprechenden Polyvinylacetale eingesetzt worden sind. Polyvinylacetale werden in einem 3-Stufenprozeß (Polyvinylacetat -> Polyvinylalkohol -> Polyvinylacetal) hergestellt, wobei Produkte resultieren, welche neben Vinylacetalgruppen noch Vinylalkohol- und Vinylacetat-Einheiten enthalten. Kommerzielle Bedeutung haben vor allem Polyvinylformal, Polyvinylacetacetal und Polyvinylbutyral (PVB) erlangt. Der größte Anwendungsbereich für Polyvinylacetale ist die Herstellung von Sicherheitsgläsern im Automobilbau und in der Architektur, wobei weichgemachte Polyvinylbutyral-Folien als Zwischenschicht in Glasscheiben eingesetzt werden. Ein weiteres Einsatzgebiet für Polyvinylacetale ist die Verwendung in korrosionsschützenden Beschichtungen. Unter anderem aufgrund ihrer guten Pigment-Bindekraft werden Polyvinylacetale auch als Bindemittel in Lacken und speziell in Druckfarben eingesetzt.

In den genannten Anwendungen werden die Polyvinylacetale in bestimmten Fällen mit Silikon modifiziert. Um die Widerstandsfähigkeit von Glaslaminaten mit Polyvinylacetal-Zwischenschicht zu verbessern, wird in der JP-A 06-211549 empfohlen, die Zwischenschicht aus weichgemachtem Polyvinylacetal mit Silikonöl zu modifizieren. In der US-A 4,277,299 wird der Zusatz von Polysiloxanharz als Release-Agent für Glaslaminate mit Polyvinylacetalbeschichtung empfohlen. Die JP-A 60-210551 beschreibt, dass die Schlagfestigkeit von Glaslaminaten mit Polyvinylbutyral-Zwischenschicht durch Modifizierung mit Silikonöl verbessert werden kann. Nachteilig ist dabei, dass es aufgrund der schlechten Mischbarkeit von Silikonen mit Polymeren zur Entmischung der Zusammensetzung und zur Migration des Silikonanteils kommen kann.

Aus dem Stand der Technik ist darüber hinaus bekannt, Polyvinylacetale mittels Pfropfung oder polymeranaloger Umsetzung mit Silikon zu modifizieren. Aus der JP-A 08-73542 ist ein Verfahren bekannt, bei dem die Vinylalkohol-Einheiten eines Polyvinylbutyrals mit Methacrylisocyanat umgesetzt werden, und dann ungesättigte Trialkoxysilane aufgepfropft werden. In der JP-A 09-141801 werden auf die Vinylalkohol-Einheiten eines Polvinylacetals Polydimethylsiloxan-Ketten aufgepfropft. Die JP-A 02-141289 beschreibt die polymeranaloge Umsetzung von unter anderem Polyvinylbutyral mit einem Polysiloxan. In der JP-A 07-290847 wird Polyvinylacetoacetal in Gegenwart von Diisocyanat mit einem OH-terminierten Polysiloxan umgesetzt. Nachteilig bei der Herstellung von siliconmodifizierten Polyvinylacetalen mittels polymeranaloger Umsetzung sind die sehr umständlichen Synthesen, welche mit Nebenreaktionen verbunden sind und zu Gemischen bzw. zu vernetzten Produkten führen können. Die oftmals instabile und häufig ungenügende Anbindung des Silikonanteils kann darüber hinaus zu Phasentrennung und Entmischung des Produkts führen.

Der Erfindung lag die Aufgabe zugrunde, mit Silikon modifizierte Polyvinylacetale zur Verfügung zu stellen, welche einen kovalent gebundenen Silikonanteil enthalten.

Gegenstand der Erfindung sind silikonhaltige Polyvinylacetale erhältlich mittels
1) Copolymerisation von
   a) einem oder mehreren Vinylestern von unverzweigten oder verzweigten Alkylcarbonsäuren mit 1 bis 15 C-Atomen, und
   b)einem oder mehreren Silikonmakromeren mit mindestens einer polymerisierbaren Gruppe, und
2) anschließender Verseifung des Copolymers zum silikonhaltigen Polyvinylalkohol, und
3) nachfolgender Acetalisierung des silikonhaltigen Polyvinylalkohols mit einem oder mehreren Aldehyden aus der Gruppe umfassend aliphatische und aromatische Aldehyde mit 1 bis 15 C-Atomen.

Geeignete Vinylester a) sind Vinylester von unverzweigten oder verzweigten Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 5 bis 13 C-Atomen, beispielsweise VeoVa9^{R} oder VeoVa10^{R} (Handelsnamen der Firma Shell). Besonders bevorzugt ist Vinylacetat.

Gegebenenfalls können neben dem Vinylesteranteil noch ein oder mehrere weitere Monomere a) enthalten sein. Deren Anteil wird dann so bemessen, dass der Vinylesteranteil im silikonhaltigen Mischpolymerisat ≥ 40 Mol-% beträgt. Beispiele für weitere Monomere a) sind solche aus der Gruppe umfassend Methacrylsäureester und Acrylsäureester von Alkoholen mit 1 bis 15 C-Atomen, Olefine, Diene, Vinylaromaten und Vinylhalogenide. Bevorzugte Methacrylsäureester oder Acrylsäureester sind Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat. Besonders bevorzugt sind Methylacrylat, Methylmethacrylat, n-, iso- und t-Butylacrylat, 2-Ethylhexylacrylat und Norbornylacrylat.
Geeignete Diene sind 1,3-Butadien und Isopren.
Beispiele für polymerisierbare Olefine sind Ethen und Propen. Als Vinylaromaten können Styrol und Vinyltoluol einpolymerisiert werden.
Aus der Gruppe der Vinylhalogenide werden üblicherweise Vinylchlorid, Vinylidenchlorid oder Vinylfluorid, vorzugsweise Vinylchlorid, eingesetzt.

Geeignete weitere Monomere a) sind auch polymerisierbare Silane bzw. Mercaptosilane. Bevorzugt sind γ-Acryl- bzw. γ-Methacryloxypropyltri(alkoxy)silane, α-Methacryloxymethyltri(alkoxy)silane, γ-Methacryloxypropyl-methyldi(alkoxy)silane, Vinylalkyldi(alkoxy)silane und Vinyltri(alkoxy)silane, wobei als Alkoxygruppen beispielsweise Methoxy-, Ethoxy-, Methoxyethylen-, Ethoxyethylen-, Methoxypropylenglykolether- bzw. Ethoxypropylenglykolether-Reste eingesetzt werden können. Beispiele hierfür sind Vinyltrimethoxysilan, Vinyltriethoxysilan, Vinyltripropoxysilan, Vinyltriisopropoxysilan, Vinyltris-(1-methoxy)-isopropoxysilan, Vinyltributoxysilan, Vinyltriacetoxysilan, 3-Methacryloxypropyltrimethoxysilan, 3-Methacryloxypropylmethyldimethoxysilan, Methacryloxymethyltrimethoxysilan, 3-Methacryloxypropyl-tris-(2-methoxyethoxy)silan, Vinyltrichorsilan, Vinylmethyldichlorsilan, Vinyltris-(2-methoxyethoxy)silan, Trisacetoxyvinylsilan, 3-(Triethoxysilyl)-propylbernsteinsäureanhydridsilan. Bevorzugt werden auch 3-Mercaptopropyltriethoxysilan, 3-Mercaptopropyltrimethoxysilan und 3-Mercaptopropylmethyldimethoxysilan.

Weitere Beispiele sind funktionalisierte (Meth)acrylate, insbesondere Epoxy-funktionelle wie Glycidylacrylat, Glycidylmethacrylat, Allylglycidether, Vinylglycidether, oder Hydroxyalkyl-funktionelle wie Hydroxyethyl(meth)acrylat, oder substituierte oder unsubstituierte Aminoalkyl(meth)acrylate, oder cyclische Monomere, wie N-Vinylpyrrolidon. Ferner können noch ein oder mehrere Monomere aus der Gruppe umfassend ethylenisch ungesättigte Mono- und Dicarbonsäuren, ethylenisch ungesättigte Carbonsäureamide und Cabonsäurenitrile, Monoester der Fumarsäure und Maleinsäure verwendet werden. Bevorzugt werden Acrylsäure, Methacrylsäure, Fumarsäure, Maleinsäure, N-Vinylformamid, Acrylamid, Acrylnitril, Maleinsäureanhydrid, Vinylsulfonsäure, 2-Acrylamido-2-methyl-propansulfonsäure sowie deren Salze.

Weitere Beispiele sind vorvernetzende Comonomere wie mehrfach ethylenisch ungesättigte Comonomere, beispielsweise Divinyladipat, Diallylmaleat, Allylmethacrylat, Butandioldiacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats.

Geeignete polymerisierbare Silikonmakromere b) sind solche mit der allgemeinen Formel R¹ₐR₃₋ₐSiO(SiRR¹O)_{b}(SiR₂O)ₙSiR₃₋ₐR¹ₐ, wobei R gleich oder verschieden ist, und einen einwertigen, gegebenenfalls substituierten, Alkylrest oder Alkoxyrest mit jeweils 1 bis 18 C-Atomen bedeutet, R¹ eine polymerisierbare Gruppe bedeutet, a 0 oder 1 ist, b 0 bis 10 ist, und n 3 bis 1000 ist, wobei 85 bis 100 Gew.-% der Silikonmakromere mindestens eine polymerisierbare Gruppe enthalten.

In der allgemeinen Formel R¹ₐR₃₋ₐSiO(SiRR¹O)_{b}(SiR₂O)ₙSiR₃₋ₐR¹ₐ sind Beispiele für Reste R Methyl-, Ethyl-, n-Propyl-, isoPropyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste wie der n-Hexylrest, Heptylreste wie der n-Heptylrest, Octylreste wie der n-Octylrest und iso-Octylreste wie der 2,2,4-Trimethylpentylrest, Nonylreste wie der n-Nonylrest, Decylreste wie der n-Decylrest, Dodecylreste wie der n-Dodecylrest, und Octadecylreste wie der n-Octadecylrest, Cycloalkylreste wie Cyclopentyl-, Cyclohexyl-, Cycloheptyl- und Methylcyclohexylreste.

Bevorzugt handelt es sich bei dem Rest R um einen einwertigen Kohlenwasserstoffrest mit 1 bis.6 Kohlenstoffatomen, wie Methyl-, Ethyl-, n-Propyl-, Isopropyl-, n-Butyl-, sec-Butyl, Amyl- und Hexyl-Rest, wobei der Methylrest besonders bevorzugt ist. Bevorzugte Alkoxyreste R sind solche mit 1 bis 6 Kohlenstoffatomen wie Methoxy-, Ethoxy-, Propoxy- und n-Butoxyrest, welche gegebenenfalls noch mit Oxyalkylenresten wie Oxyethylen- oder Oxymethylen-Resten substituiert sein können. Besonders bevorzugt werden der Methoxy- und Ethoxyrest.

Die genannten Alkylreste und Alkoxyreste R können gegebenenfalls auch substituiert sein, beispielsweise mit Halogen, Mercaptogruppen, epoxyfunktionellen Gruppen, Carboxygruppen, Ketogruppen, Enamingruppen, Aminogruppen, Aminoethylaminogruppen, iso-Cyanatogruppen, Aryloxygruppen, Alkoxysilylgruppen und Hydroxygruppen.

Geeignete polymerisierbare Gruppen R¹ sind Alkenylreste mit 2 bis 8 C-Atomen. Beispiele für solche polymerisierbare Gruppen sind die Vinyl-, Allyl-, Butenyl-, sowie Acryloxyalkyl- und Methacryloxyalkyl-Gruppe, wobei die Alkylreste 1 bis 4 C-Atome enthalten. Bevorzugt werden die Vinylgruppe, 3-Methacryloxypropyl-, Methacryloxymethyl-, Acryloxymethyl- und 3-Acryloxypropyl-Gruppe. Als polymerisierbare Gruppe ist in diesem Zusammenhang auch eine kettenübertragende Gruppe wie die Mercaptoalkylgruppe mit 1 bis 6 C-Atomen zu verstehen.

Bei den nur einfach mit ungesättigten Gruppen substituierten Siliconen sind α-Monovinyl-Polydimethylsiloxane, α-Mono-(3-acryloxypropyl)-Polydimethylsiloxane, α-Mono-(acryloxymethyl)-Polydimethylsiloxane, α-Mono-(methacryloxymethyl)-Polydimethylsiloxane, α-Mono-(3-methacryloxypropyl)-Polydimethylsiloxane bevorzugt. Bei den α-monofunktionellen Polydimethylsiloxanen befindet sich am anderen Kettenende ein Alkyl- oder Alkoxyrest, beispielsweise ein Methyl- oder Butylrest.

Besonders bevorzugt sind Siliconmakromere mit linearer oder verzweigter Struktur, mit R = Methylrest, und mit n = 3 bis 1000, bevorzugt 50 bis 500, welche eine oder zwei terminale (ein a = 1 oder beide a = 1), polymerisierbare Gruppen enthalten; oder ein oder mehrere kettenständige (beide a = 0 und b > 1) polymerisierbare Gruppen enthalten; oder 1 bis 2 terminale und mindestens eine kettenständige (1 oder 2 a = 1 und b > 1), polymerisierbare Gruppen enthalten. Beispiele hierfür sind Polydialkylsiloxane mit einer oder zwei Vinyl-, Acryloxyalkyl-, Methacryloxyalkyl-oder Mercaptoalkyl-Gruppen, wobei die Alkylgruppen gleich oder verschieden sein können und 1 bis 6 C-Atome enthalten. Besonders bevorzugt werden α,ω-Divinyl-Polydimethylsiloxane (wie beispielsweise die VIPO-Öle der Wacker-Chemie GmbH), α,ω-Di-(3-acryloxypropyl)-Polydimethylsiloxane, α,ω-Di-(3-methacryloxypropyl)-Polydimethylsiloxane, α,ω-Di-(acryloxymethyl)-Polydimethylsiloxane, α,ω-Di-(methacryloxymethyl)-Polydimethylsiloxane, α-Monovinyl-Polydimethylsiloxane, α-Mono-(3-acryloxypropyl)-Polydimethylsiloxane, α-Mono-(3-methacryloxypropyl)-Polydimethylsiloxane. Bevorzugt werden auch α-Mono-(3-mercaptopropyl)-Polydimethylsiloxane oder α,ω-Di-(3-mercaptopropyl)-Polydimethylsiloxane eingesetzt.

Am meisten bevorzugt werden α,ω-Divinyl-Polydimethylsiloxane. Geeignet sind ferner Gemische von linearen oder verzweigten Polydialkylsiloxanen ohne polymerisierbare Gruppe, insbesondere Polydimethylsiloxanen, mit linearen oder verzweigten Polydialkylsiloxanen, insbesondere Polydimethylsiloxanen, welche eine und/oder zwei polymerisierbare Gruppen, insbesondere Vinylgruppen am Kettenende enthalten. Beispiele für solche Gemische sind binäre Gemische aus Polydialkylsiloxanen, welche eine polymerisierbare Gruppe enthalten und Polydialkylsiloxanen ohne polymerisierbare Gruppe, sowie binäre Gemische aus Polydialkylsiloxanen, welche zwei polymerisierbare Gruppen enthalten und Polydialkylsiloxanen ohne polymerisierbare Gruppe, wobei der Anteil an unfunktionellen Polydialkylsiloxanen jeweils 0.5 bis 15 Gew.-%, bezogen auf das Gesamtgewicht der Silikonmakromere beträgt.

Bevorzugt werden auch ternäre Gemische aus Polydialkylsiloxanen, welche zwei polymerisierbare Gruppen enthalten, Polydialkylsiloxanen, welche eine polymerisierbare Gruppe enthalten und Polydialkylsiloxanen ohne polymerisierbare Gruppe, wobei besonders bevorzugt die Gewichtsanteile in der Mischung 0.5 bis 10 Gew.-% an Polydialkylsiloxan ohne polymerisierbare Gruppe, 5 bis 50 Gew.-% an Polydialkylsiloxanen mit einer polymerisierbaren Gruppe und 40 bis 90 Gew.-% an Polydialkylsiloxan mit zwei polymerisierbaren Gruppen betragen, jeweils bezogen auf das Gesamtgewicht der Silikonkomponente. Die genannten Polydialkylsiloxane sowie deren Gemische sind im Handel erhältlich, beispielsweise Dehesive^{®}-Silikone der Wacker-Chemie GmbH.
Geeignet sind auch die polymerisierbaren Silikonmakromere, wie sie in der EP-A 614924 beschrieben sind, oder Silikonmakromere mit dendrimerer Struktur, die in der EP-A 1095953 angegeben sind.

Die Polymerisation zum silikonhaltigen Polyvinylester erfolgt in bekannter Weise, vorzugsweise durch Substanzpolymerisation, Suspensionspolymerisation oder durch Polymerisation in organischen Lösungsmitteln, bevorzugt in Alkoholen, Ketonen, oder Estern oder in Gemischen dieser Lösungsmittel. Geeignete Lösungsmittel und Regler sind beispielsweise Methanol, Ethanol, Propanol, Isopropanol. Die Polymerisation wird unter Rückfluß bei einer Temperatur von 20°C bis 100°C durchgeführt und durch Zugabe gängiger Initiatoren radikalisch initiiert. Geeignete Radikalinitiatoren sind öllösliche Initiatoren, wie t-Butylperoxy-2-ethylhexanoat, t-Butylperoxypivalat, t-Butylperoxyneodecanoat, Dibenzoylperoxid, t-Amylperoxypivalat, Di-(2-ethylhexyl)peroxydicarbonat, 1,1-Bis(t-Butylperoxy)-3,3,5-trimethylcyclohexan und Di-(4-t-Butylcyclohexyl)peroxydicarbonat. Geeignet sind auch Azoinitiatoren wie Azobisisobutyronitril. Die Initiatoren werden im allgemeinen in einer Menge von 0.005 bis 5.0 Gew.-%, bevorzugt 0.1 bis 2.0 Gew.-%, bezogen auf Gesamtmonomer, eingesetzt.

Besonders bevorzugt wird zur Herstellung des silikonhaltigen Festharzes das Verfahren aus der DE-A 10215962. Die Herstellung der Silikonorganocopolymere erfolgt dabei mittels Polymerisation in einem nichtwässrigen, organischen Lösungsmittel, in Gegenwart von Radikalinitiatoren, wobei als nichtwässriges Lösungsmittel ein Gemisch aus mindestens zwei nichtwässrigen Lösungsmitteln eingesetzt wird, von denen mindestens ein nichtwässriges Lösungsmittel eine Übertragungskonstante Cₛ zu Vinylacetat von Cₛ > 20 x 10⁻⁴ bei 70°C aufweist. Die Übertragungskonstante Cₛ der nichtwässrigen Lösungsmittel kann beispielsweise aus Polymer Handbook 4^{th} Edition (1999), Kap II entnommen werden, wobei die Werte für Vinylacetat auf den Seiten 142 bis 149 aufgeführt sind. Bevorzugte Lösungsmittel mit Cₛ > 20 x 10⁻⁴ bei 70°C sind Ethanol und Isopropanol. Bei den Lösungsmittelgemischen beträgt der Anteil an Lösungsmittel mit Cₛ > 20 x 10⁻⁴ im allgemeinen 3 bis 50 Gew.-%, vorzugsweise 5 bis 30 Gew.-%, besonders bevorzugt 7 bis 20 Gew.-%. Besonders bevorzugt werden Lösungsmittelgemische mit Isopropanol; am meisten bevorzugt wird ein Gemisch aus Ethylacetat und Isopropanol.

Die Reaktionstemperatur beträgt 20°C bis 100°C, vorzugsweise 40°C bis 80°C. Im allgemeinen wird bei Normaldruck polymerisiert. Bei der Copolymerisation von bei Raumtemperatur gasförmigen Monomeren wie Ethylen wird unter Druck, im allgemeinen zwischen 1 und 100 bar, gearbeitet. Im allgemeinen wird die Polymerisation bis zu einem Festgehalt von 15 bis 90 %, bevorzugt bis zu einem Festgehalt von 20 bis 75 %, durchgeführt.

Die Einstellung des Molekulargewichts kann bei Polymerisationen in Lösung in bekannter Weise durch Zugabe von Regler, durch den Lösungsmittelgehalt, durch Variation der Initiatorkonzentration und durch Variation der Temperatur erfolgen. In einer bevorzugten Ausführungsform zur Herstellung des silikonhaltigen Polyvinylesters wird die Silikonkomponente mit dem Vinylester und gegebenenfalls weiteren Comonomeren teilweise vorgelegt und der Rest wird zudosiert. Besonders bevorzugt sind dabei die Verhältnisse der Comonomeren zu jedem Zeitpunkt der Polymerisation annähernd konstant. Nach Abschluß der Polymerisation kann zur Restmonomerentfernung in Anwendung bekannter Methoden nachpolymerisiert werden. Flüchtige Restmonomere und weitere flüchtige Bestandteile, wie Lösungsmittel oder Regler, können auch mittels Destillation, vorzugsweise unter reduziertem Druck, entfernt werden. Bei Suspensionspolymerisationen kann dies auch durch unterstützendes Einleiten von Wasserdampf (= Strippen) erfolgen.

Zur Herstellung der Verseifungsprodukte, das heißt der silikonhaltigen Polyvinylalkohole, wird das silikonhaltige Polyvinylesterharz in dem Fachmann bekannter Weise in alkoholischer Lösung verseift, wobei die dabei üblichen sauren oder alkalischen Katalysatoren eingesetzt werden. Geeignete Lösungsmittel sind aliphatische Alkohole mit 1 bis 6 C-Atomen, vorzugsweise Methanol oder Ethanol. Die Verseifung kann aber auch in einer Mischung bestehend aus Wasser und aliphatischem Alkohol durchgeführt werden. Vorzugsweise wird das silikonhaltige Festharz in Methanol, unter Einstellen eines Feststoffgehalts von 10 bis 70 Gew.-% aufgenommen. Die Verseifung bzw. Umesterung wird im allgemeinen bei Temperaturen von 20°C bis 80°C, vorzugsweise 30°C bis 60°C, durchgeführt. Bei Erreichen des gewünschten Hydrolysegrades, im allgemeinen zwischen 30 und 100 Mol-%, vorzugsweise zwischen 60 und 90 Mol-%, wird die Umesterung abgebrochen. Saure Katalysatoren sind beispielsweise starke Mineralsäuren, wie Salzsäure oder Schwefelsäure, oder starke organische Säuren, wie aliphatische oder aromatische Sulphonsäuren. Bevorzugt werden alkalische Katalysatoren eingesetzt. Dies sind beispielweise die Hydroxide, Alkoholate und Carbonate von Alkali- oder Erdalkalimetallen. Die Katalysatoren werden in Form deren wässrigen oder alkoholischen Lösungen eingesetzt. Die eingesetzten Mengen an alkalischem Katalysator betragen im allgemeinen 0.2 bis 20.0 Mol-%, bezogen auf Silikonorganopolymer.

Zur Acetalisierung werden die (teil- oder voll)verseiften silikonhaltigen Polyvinylester vorzugsweise in wässrigem Medium aufgenommen. Üblicherweise wird ein Festgehalt der wässrigen Lösung von 5 bis 40 Gew.-% eingestellt. Die Acetalisierung erfolgt in Gegenwart von sauren Katalysatoren wie Salzsäure, Schwefelsäure, Salpetersäure oder Phosphorsäure. Vorzugsweise wird durch Zugabe von 20 %-iger Salzsäure der pH-Wert der Lösung auf Werte < 1 eingestellt. Nach Zugabe des Katalysators wird die Lösung auf vorzugsweise -10°C bis +20°C abgekühlt. Die Acetalisierungsreaktion wird durch Zugabe des Aldehydanteils gestartet.

Bevorzugte Aldehyde aus der Gruppe der aliphatischen Aldehyde mit 1 bis 15 C-Atomen sind Formaldehyd, Acetaldehyd, Propionaldehyd und am meisten bevorzugt Butyraldehyd, oder eine Mischung aus Butyraldehyd und Acetaldehyd. Als aromatische Aldehyde können beispielsweise Benzaldehyd oder dessen Derivate verwendet werden. Die Zugabemenge an Aldehyd richtet sich dabei nach dem erwünschten Acetalisierungsgrad. Da die Acetalisierung mit fast vollständigem Umsatz abläuft, kann die Zugabemenge durch einfache stöchiometrische Rechnung bestimmt werden. Die Acetalisierung wird nach Abschluß der Zugabe des Aldehyds durch Erwärmen des Ansatzes auf 10°C bis 60°C und mehrstündiges Rühren, vorzugsweise 1 bis 6 Stunden vervollständigt, und das pulverförmige Reaktionsprodukt wird durch Filtration und nachgeschaltetem Waschschritt isoliert. Zur Stabilisierung können ferner Alkalien zugesetzt werden. Während der Fällung und der Nachbehandlung kann mit Emulgatoren gearbeitet werden, um die wässrige Suspension des silikonhaltigen Polyvinylacetals zu stabilisieren.

Zur Stabilisierung der wässrigen Suspension des silikonhaltigen Polyvinylacetals können anionische, zwitterionische, kationische und nichtionische Emulgatoren sowie Schutzkolloide verwendet werden. Bevorzugt werden zwitterionische oder anionische Emulgatoren eingesetzt, gegebenenfalls auch in Mischungen. Als nichtionische Emulgatoren werden bevorzugt Kondensationsprodukte von Ethylenoxid (EO) oder Propylenoxid (PO) mit linearen oder verzweigten Alkoholen mit 6 bis 24 Kohlenstoffatomen, Alkylphenolen oder linearen oder verzweigten Carbonsäuren von 6 bis 24 Kohlenstoffatomen eingesetzt, sowie Blockcopolymere von Ethylenoxid und Propylenoxid eingesetzt. Geeignete anionische Emulgatoren sind beispielsweise Alkylsulfate, Alkylsulfonate, Alkylarylsulfate, sowie Sulfate oder Phosphate von Kondensationsprodukten des Ethylenoxides mit linearen oder verzweigten Alkylalkoholen und mit 2 bis 25 EO-Einheiten, Alkylphenolen, und Mono- oder Diester der Sulfobernsteinsäure. Geeignete zwitterionische Emulgatoren sind beispielsweise Alkyldimethylaminoxide, wobei die Alkylkette 6 bis 20 C-Atome besitzt. Als kationische Emulgatoren können z.B. Tetraalkylammoniumhalogenide, wie C₆-C₂₀-Alkyltrimethylammoniumbromid verwendet werden. Ebenso können Trialkyamine mit einem längeren (≥ 5 C-Atome) und zwei kürzeren Kohlenwasserstoffresten (< 5 C-Atome) eingesetzt werden, die im Zuge der Acetalisierung, die unter stark sauren Bedingungen abläuft, in protonierter Form vorliegen und als Emulgator wirken können. Die Emulgatormenge beträgt 0.01 bis 20 Gew.-%, bezogen auf das Gesamtgewicht des Polyvinylacetals in der Mutterlauge. Bevorzugt ist eine Menge von 0.01 bis 2 Gew.-% an Emulgator, besonders bevorzugt ist eine Menge von 0.01 bis 1 Gew.-% Emulgator bezogen auf das silikonhaltige Polyvinylacetal.

Besonders bevorzugt werden silikonhaltige Polyvinylacetale mit 0 bis 30 Gew.-%, bevorzugt 1 bis 25 Gew.-% Vinylester-Einheiten, insbesondere Vinylacetat-Einheiten;
mit 5 bis 95 Gew.-%, bevorzugt 10 bis 25 Gew.-% Vinylalkohol-Einheiten;
mit 3 bis 94.9 Gew.-%, bevorzugt 40 bis 60 Gew.-% Vinylacetal-Einheiten, insbesondere Vinylbutyral-, Vinylacetacetal-Einheiten oder eine Mischung dieser Einheiten; und
mit einem Silikonanteil von 0.1 bis 45 Gew.-%, bevorzugt 5 bis 35 Gew.-%, jeweils bezogen auf das Gesamtgewicht des silikonhaltigen Polyvinylacetals, wobei sich die Angaben in Gew.-% auf 100 Gew.-% aufaddieren.

Mit der erfindungsgemäßen Verfahrensweise werden silikonhaltige Polyvinylacetale zugänglich, welche gegenüber den bisher eingesetzten und bekannten, nicht modifizierten Polyvinylacetalen auf vielen Gebieten deutlich bessere Eigenschaften mit sich bringen. So wird durch den Einsatz der erfindungsgemäßen silikonhaltigen Polyvinylacetale die Wasserbeständigkeit, Wasserfestigkeit bzw. die Hydrophobie von Beschichtungen deutlich erhöht, des weiteren weist die Beschichtung eine ausgeprägte Trennwirkung bzw. ein ausgeprägtes Releaseverhalten auf. Beschichtungen, die die erfindungsgemäßen silikonhaltigen Polyvinylacetale enthalten, zeichnen sich ferner durch eine besondere Glätte der Oberfläche aus. Obwohl die Glasübergangstemperaturen Tg der erfindungsgemäßen silikonhaltigen Polyvinylacetale gegenüber denen der nicht modifizierten Polyvinylacetale herabgesetzt sind, zeigen die silikonhaltigen Polyvinylacetale des weiteren dennoch eine bessere Blockstabilität, was auf den Silikongehalt zurückzuführen ist.

Besonders vorteilhaft ist der Einsatz der silikonhaltigen Polyvinylacetale insbesondere in Druckfarben. Durch die Kombination eines organischen Anteils auf Polyvinylacetal-Basis und eines Silikonanteils, wobei beide Anteile kovalent miteinander verknüpft sind, zeigen die silikonhaltigen Polyvinylacetale in vielen Lösungsmitteln amphiphile Eigenschaften. Dies führt zum einen dazu, dass die Pigmentdispergierung deutlich verbessert wird, zum anderen dazu, dass sich auch bei einem höheren Bindemittelgehalt eine sehr niedrige Viskosität einstellt, wodurch auch eine höhere Pigmentierung möglich ist. Eine 10 %-ige ethanolische Lösung der erfindungsgemäßen silikonhaltigen Polyvinylacetale zeigt ferner eine deutlich niedrigere Viskosität als die analoge Lösung herkömmlicher Polyvinylacetale mit gleichem Molekulargewicht.

Je nach Grad der Modifizierung mit Silikon, d.h. je nach Silikonanteil, können sich die silikonhaltigen Polyvinylacetale auch in Lösungsmitteln lösen, in denen sich die herkömmlichen Polyvinylacetale nicht lösen. Zu nennen sind hier beispielsweise aliphatische Lösungsmittel, wie Hexan, Cyclohexan, Benzin, Heptan, Oktan etc. Damit wird es möglich, mit den erfindungsgemäßen silikonhaltigen Polyvinylacetalen Druckfarben herzustellen, die für eine Vielzahl von Druckverfahren geeignet sind.

Geeignete Druckfarbenformulierungen sind dem Fachmann bekannt und enthalten im allgemeinen 5 bis 50 Gew.-% Pigmentanteil, beispielsweise Disazo- oder Phthalocyanin-Pigmente, 4 bis 40 Gew.-% silikonhaltiges Polyvinylacetal-Bindemittel und Lösungsmittel, beispielsweise Alkohole wie Ethanol oder Ester wie Ethylacetat. Gegebenenfalls können noch weitere Zusatzstoffe wie Verzögerer, Haftvermittler, Weichmacher und andere Additive, wie beispielsweise Füllstoffe oder Wachse, enthalten sein.

Auch für Verbundsicherheitsglas und Glasverbunde, Hochsicherheitsglas oder Scheibenfolien sind die silikonhaltigen Polyvinylacetale sehr gut geeignet.

Des weiteren dienen wasserlösliche, teilacetalisierte, silikonhaltige Polyvinylacetale, die auch ionische Gruppen wie Carboxylatgruppen oder Sulfonatgruppen enthalten können, als Schutzkolloid, beispielsweise für wässrige Dispersionen, bei der Polymerisation in wässrigem Medium, und bei der Herstellung von in Wasser redispergierbaren Dispersionspulvern. Bevorzugt werden dabei wasserlösliche (Löslichkeit von mehr als 10 g/l in Wasser unter Normalbedingungen) Polyvinylacetale mit einem Acetalisierungsgrad von 1 bis 20 Mol-%, insbesondere 3 bis 16 Mol-%. Durch den Einsatz derartiger Schutzkolloide ist es möglich, auf einfache Weise die vorteilhaften Eigenschaften von Silikonen in Dispersionen oder Pulver einzubringen.

Die silikonhaltigen Polyvinylacetale können ferner in Lacken auf wässriger Basis oder auf Basis von organischen Lösungsmitteln vorteilhafte Verwendung finden. Einige Vorteile wurden bereits oben genannt. Weitere Einsatzgebiete der silikonhaltigen Polyvinylacetale sind die Verwendung als Bindemittel in Korrosionsschutzmitteln, wobei als Vorteile die hohe Hydrophobie und das wasserabweisende Verhalten zu nennen sind. Weiter sind die silikonhaltigen Polyvinylacetale auch als Bindemittel in der Keramikindustrie, speziell als Binder für keramische Grünkörper, geeignet. Zu nennen ist auch der Einsatz als Bindemittel für Keramikpulver und Metallpulver im Spritzguß (powder injection molding) und als Bindemittel für die Innenbeschichtung von Dosen.

Weitere Anwendungen sind die Beschichtung von Holz, Metallen, Glas, Kunststoffen und Papier; die Verwendung als Trennmittel oder zur Herstellung von Releasebeschichtungen; der Einsatz als Hydrophobierungs- und Modifizierungsmittel; die Verwendung in kosmetischen Formulierungen, zur Textilbeschichtung oder zur Behandlung von Textilien; der Einsatz als Additiv im Baubereich für zementäre und nicht zementäre Systeme, als Additiv für Antischaum-Formulierungen; die Verwendung im Bautenschutz zur Herstellung von witterungsbeständigen Beschichtungen oder Dichtstoffen, sowie im Bereich Polish.

Die nachfolgenden Beispiele dienen zur weiteren Erläuterung der Erfindung, ohne diese in irgendeiner Weise einzuschränken:

### Beispiele:

### Rohstoffe:

### PDMS-Mischung (Wacker Dehesive^{®} 929):

Gemisch dreier Polydimethylsiloxane mit ca. 100 SiOMe₂-Einheiten, das 5 Gew.-% unfunktionalisiertes Polydimethylsiloxan, 35 Gew.-% α-monovinyl-funktionalisiertes Polydimethylsiloxan und 60 Gew.-% α,ω-divinyl-funktionalisiertes Polydimethylsiloxan enthält.
VIPO 200: α,ω-Divinyl-Polydimethylsiloxan mit ca. 100 SiOMe₂-Einheiten

### 1. Herstellung von Vinylacetat-Polydimethylsiloxan-Copolymerisaten:

### Beispiel a):

In einem 120 1-Rührkessel mit Ankerrührer, Rückflußkühler und Dosiereinrichtungen wurden 54.65 kg Ethylacetat, 303.33 g PDMS-Gemisch (= Dehesive 929), 5.47 kg Isopropanol, 44.71 g PPV (t-Butylperpivalat, 75 %-ige Lösung in Aliphaten) und 2.73 kg Vinylacetat vorgelegt. Anschließend wurde die Vorlage bei einer Rührerdrehzahl von 95 Upm auf 70°C aufgeheizt. Nach Erreichen der Innentemperatur von 70°C wurde die Initiatordosierung (4.10 kg Ethylacetat und 173.91 g PPV) mit einer Rate von 826 g/h gestartet. Zehn Minuten nach dem Start der Initiatordosierung wurde die Monomerdosierung (2.43 kg PDMS-Gemisch und 21.86 kg Vinylacetat) mit einer Rate von 6.08 kg/h eingefahren. Die Initiatordosierung erstreckte sich über einen Zeitraum von 310 min, die Monomerdosierung endete 60 min früher. Nach Ende beider Dosierungen wurde noch 120 min bei 70°C nachpolymerisiert. Die erhaltene Polymerlösung wurde anschließend aufgeheizt zum Destillieren (Lösungsmittelaustausch), wobei das Destillat immer wieder durch Methanol ersetzt wurde. Dieser Vorgang wurde wiederholt, bis die Lösung frei von Ethylacetat und Isopropanol war.
Analysen: Festgehalt (FG): 45.6 % (in Methanol), GC-Analyse: Rest-VAc-Gehalt 20 ppm; Rest-Ethylacetat: 1100 ppm, Säurezahl (SZ): 3.36 mgKOH/g, Viskosität (Höppler, 10 %-ige Lösung in Ethylacetat) = 1.34 mPas; SEC M_{w}= 13502 g/mol, Mₙ = 5075 g/mol, Polydispersität = 2.66;
Glasübergangstemperatur (Tg): Tg = 30.1°C.
Zusammensetzung des Harzes laut ¹H-NMR (CDCl₃) : 10.75 Gew.-% (12.28 mol-%) PDMS, 89.25 Gew.-% (87.72 mol-%) PVAc.

### Beispiel b):

In einem 120 1-Rührkessel mit Ankerrührer, Rückflußkühler und Dosiereinrichtungen wurden 51.57 kg Ethylacetat, 481.63 g PDMS-Gemisch (Dehesive 929), 8.09 kg Isopropanol, 51.78 g PPV (t-Butylperpivalat, 75 %-ige Lösung in Aliphaten) und 2.53 kg Vinylacetat vorgelegt. Anschließend wurde die Vorlage bei einer Rührerdrehzahl von 95 Upm auf 70°C aufgeheizt. Nach Erreichen der Innentemperatur von 70°C wurde die Initiatordosierung (4.07 kg Ethylacetat und 201.33 g PPV) mit einer Rate von 827 g/h gestartet. Zehn Minuten nach dem Start der Initiatordosierung wurde die Monomerdosierung (3.86 kg PDMS-Gemisch und 20.25 kg Vinylacetat) mit einer Rate von 6.03 kg/h eingefahren. Die Initiatordosierung erstreckte sich über einen Zeitraum von 310 min, die Monomerdosierung endete 60 min früher. Nach Ende beider Dosierungen wurde noch 120 min bei 70°C nachpolymerisiert. Die erhaltene Polymerlösung wurde anschließend aufgeheizt zum Destillieren (Lösungsmittelaustausch), wobei das Destillat immer wieder durch Methanol ersetzt wurde. Dieser Vorgang wurde wiederholt, bis die Lösung frei von Ethylacetat und Isopropanol war.
Analysen: FG: 50.0 % (in Methanol), GC-Analyse: Rest-VAc-Gehalt 420 ppm; Rest-Ethylacetat: 1.06 %, Säurezahl 2.80 mgKOH/g, Viskosität (Höppler, 10 %-ige Lösung in Ethylacetat) = 1.39 mPas; SEC M_{w} = 13640 g/mol, Mₙ = 4497 g/mol, Polydispersität = 3.03;
Glasübergangstemperatur (Tg): Tg = 28.6°C
Zusammensetzung des Harzes laut ¹H-NMR (CDCl₃): 17.46 Gew.-% (19.75 mol-%) PDMS, 82.54 Gew.-% (80.25 mol-%) PVAc.

### Beispiel c):

In einem 120 1-Rührkessel mit Ankerrührer, Rückflußkühler und Dosiereinrichtungen wurden 49.97 kg Ethylacetat, 651.01 g PDMS-Gemisch (Dehesive 929), 9.38 kg Isopropanol, 58.88 g PPV (t-Butylperpivalat, 75 %-ige Lösung in Aliphaten) und 2.34 kg Vinylacetat vorgelegt. Anschließend wurde die Vorlage bei einer Rührerdrehzahl von 95 Upm auf 70°C aufgeheizt. Nach Erreichen der Innentemperatur von 70°C wurde die Initiatordosierung (4.05 kg Ethylacetat und 228.88 g PPV) mit einer Rate von 829 g/h gestartet. Zehn Minuten nach dem Start der Initiatordosierung wurde die Monomerdosierung (5.21 kg PDMS-Gemisch und 18.77 kg Vinylacetat) mit einer Rate von 6.0 kg/h eingefahren. Die Initiatordosierung erstreckte sich über einen Zeitraum von 310 Min, die Monomerdosierung endete 60 Min früher. Nach Ende beider Dosierungen wurde noch 120 Min bei 70°C nachpolymerisiert. Die erhaltene Polymerlösung wurde anschließend aufgeheizt zum Destillieren (Lösungsmittelaustausch), wobei das Destillat immer wieder durch Methanol ersetzt wurde. Dieser Vorgang wurde wiederholt, bis die Lösung frei von Ethylacetat und Isopropanol war.
Analysen: FG: 52.9 % (in Methanol), GC-Analyse: Rest-VAc-Gehalt 60 ppm; Rest-Ethylacetat: 2.0 %, SZ: 2.24 mg KOH/g, Viskosität(Höppler, 10 %-ige Lösung in Ethylacetat) = 1.23 mPas; SEC M_{w} = 10777 g/mol, Mₙ = 3626 g/mol, Polydispersität = 2.97; Glasübergangstemperatur (Tg): Tg = 26.2°C Zusammensetzung des Harzes laut ¹H-NMR (CDCl₃): 22.56 Gew.-% (25.31 mol-%) PDMS, 77.44 Gew.-% (74.69 mol-%) PVAc.

### Beispiel d):

In einem 120 1-Rührkessel mit Ankerrührer, Rückflußkühler und Dosiereinrichtungen wurden 51.70 kg Ethylacetat, 8.11 kg Isopropanol, 301.79 g VIPO 200, 51.91 g PPV (Tertiärbutylperpivalat, 75 %-ige Lösung in Aliphaten) und 2.72 kg Vinylacetat vorgelegt. Anschließend wurde die Vorlage bei einer Rührerdrehzahl von 95 Upm auf 70°C aufgeheizt. Nach Erreichen der Innentemperatur von 70°C wurde die Initiatordosierung (4.08 kg Ethylacetat und 201.84 g PPV (Tertiärbutylperpivalat, 75 %-ige Lösung in Aliphaten) mit einer Rate von 829 g/h gestartet. Zehn Minuten nach dem Start der Initiatordosierung wurde die Monomerdosierung (2.42 kg VIPO 200 und 21.75 kg Vinylacetat) mit einer Rate von 6.05 kg/h eingefahren. Die Initiatordosierung erstreckte sich über einen Zeitraum von 310 Min, die Monomerdosierung endete 60 Min früher. Nach Ende beider Dosierungen wurde noch 120 Min bei 70°C nachpolymerisiert. Nach dieser Nachreaktionszeit wurde der Kessel aufgeheizt zur Destillation, dabei wurde die Polymerlösung jeweils bis ca. 95 % Festgehalt aufkonzentriert und anschließend wieder mit Methanol auf einen Festgehalt von 50% verdünnt. Dieser Vorgang wurde insgesamt 3 mal wiederholt (Entmonomerisierung und Lösemittelaustausch).
Analysen: FG: 48.5 % (in Methanol), GC-Analyse: Rest-VAc-Gehalt < 10 ppm; Rest-Ethylacetat 730 ppm; Säurezahl 11.22 mgKOH/g, Viskosität (Höppler, 10 %-ige Lösung in Ethylacetat) = 1.25 mPas, SEC M_{w} = 14500, Mₙ = 5612, Polydispersität = 2.58; Glasübergangstemperatur (Tg): Tg = 26.5°C.
Zusammensetzung des Harzes laut ¹H-NMR (CDCl₃): 10.68 Gew.-% (12.21 mol-%) PDMS, 89.32 Gew.-% (87.79 mol-%) PVAc.

### Beispiel e):

In einem 120 1-Rührkessel mit Ankerrührer, Rückflußkühler und Dosiereinrichtungen wurden 38.84 kg Ethylacetat, 6.57 kg Isopropanol, 1010 g VIPO 200, 80.27 g PPV (Tertiärbutylperpivalat, 75 %-ige Lösung in Aliphaten) und 3.66 kg Vinylacetat vorgelegt. Anschließend wurde die Vorlage bei einer Rührerdrehzahl von 95 Upm auf 70°C aufgeheizt. Nach Erreichen der Innentemperatur von 70°C wurde die Initiatordosierung (6.31 kg Ethylacetat und 312.12 g PPV (Tertiärbutylperpivalat, 75 %-ig Lösung in Aliphaten) mit einer Rate von 1282 g/h gestartet. Zehn Minuten nach dem Start der Initiatordosierung wurde die Monomerdosierung (8.13 kg VIPO 200 und 29.25 kg Vinylacetat) mit einer Rate von 9.35 kg/h eingefahren. Die Initiatordosierung erstreckte sich über einen Zeitraum von 310 Min, die Monomerdosierung endete 60 Min früher. Nach Ende beider Dosierungen wurde noch 120 Min bei 70°C nachpolymerisiert. Nach dieser Nachreaktionszeit wurde der Kessel aufgeheizt zur Destillation, dabei wurde die Polymerlösung jeweils bis ca. 95 % Festgehalt aufkonzentriert und anschließend wieder mit Methanol auf einen Festgehalt von 50% verdünnt. Dieser Vorgang wurde insgesamt 3 mal wiederholt (Entmonomerisierung und Lösemittelaustausch).
Analysen: FG: 48.3 % (in Methanol), GC-Analyse: Rest-VAc-Gehalt < 10 ppm; Rest-Ethylacetat 5520 ppm; Rest-Isopropanol: 1200 ppm; Säurezahl 0 mgKOH/g, Viskosität (Höppler, 10 %-ige Lösung in Ethylacetat) = 1.65 mPas, SEC M_{w} = 31813, Mₙ = 6451, Polydispersität = 4.93; Glasübergangstemperatur (Tg): Tg = 25.9°C.
Zusammensetzung des Harzes laut ¹H-NMR (CDCl₃): 23.83 Gew.-% (26.68 mol-%) PDMS, 76.17 Gew.-% (73.32 mol-%) PVAc.

### 2. Verseifung der Vinylacetat-Polydimethylsiloxan-Copolymerisate zur Herstellung der silikonhaltigen Polyvinylalkohole:

### Beispiel f) (17.8 Gew.-% Silikon):

In einem 120 1-Rührkessel (drucklos), mit Rückflußkühler, Dosiereinrichtungen und einem Ankerrührer, wurden 26.3 kg einer 45.6 %-igen Polymerlösung in Methanol - hergestellt nach Beispiel a) - vorgelegt und auf einen FG von ca. 20 % mit Methanol verdünnt. Diese Lösung wurde dann auf 35 °C aufgeheizt. Anschließend wurden 220 ml 45 %-ige wässrig/methanolische Natronlauge schnell zugegeben. 11 min nach der Laugenzugabe wurde mit konz. Essigsäure auf einen pH von ca. 7 eingestellt. Um den gefällten Polyvinylalkohol als wässrige Lösung zu erhalten, wurde die Suspension aufgeheizt zum Destillieren und das Destillat sukzessive durch Wasser ersetzt. Dieser Vorgang wurde wiederholt, bis das gesamte Methanol durch Wasser ersetzt worden war.
Wässrige Polyvinylalkohol-Lösung - Analysen:
FG: 11.3 %; SZ: 0 mgKOH/g; pH(4 %-ig in Wasser): 6.5; Verseifungszahl (VZ): 87.15 mgKOH/g;
VOC (volatile organic compounds) (Methanol): 8 ppm
Zusammensetzung laut ¹H-NMR (in DMSO mit Trifluoressigsäure als Shift-Reagenz): 13.9 Gew.-% (8.2 mol-%) Vinylacetat, 68.3 Gew.-% (79.5 mol-%) Vinylalkohol, 17.8 Gew.-% (12.3 mol-%) PDMS.

### Beispiel g) (26.0 Gew.-% Silikon):

Fahrweise wie Beispiel f) jedoch 13 min Verseifungszeit. Verseift wurde das Harz aus Beispiel b).
Wässrige Polyvinylalkohol-Lösung - Analysen:
FG: 11.4 %; SZ: 0 mgKOH/g; pH(4 %-ig in Wasser): 6.74; VZ: 96.33 mgKOH/g;
VOC (Methanol): 590 ppm
Zusammensetzung laut ¹H-NMR (in DMSO mit Trifluoressigsäure als Shift-Reagenz): 15.0 Gew.-% (9.3 mol-%) Vinylacetat, 59.0 Gew.-% (71.8 mol-%) Vinylalkohol, 26.0 Gew.-% (18.9 mol-%) PDMS.

### Beispiel h) (32.9 Gew.-% Silikon):

Fahrweise wie Beispiel f) jedoch 11 min Verseifungszeit. Verseift wurde das Harz aus Beispiel c).
Wässrige Polyvinylalkohol-Lösung - Analysen:
FG: 10.95 %; SZ: 0 mgKOH/g; pH (4 %-ig in Wasser): 6.79; VZ: 45.5 mgKOH/g;
VOC (Methanol): nicht ermittelt
Zusammensetzung laut ¹H-NMR (in DMSO mit Trifluoressigsäure als Shift-Reagenz): 7.9 Gew.-% (4.9 mol-%) Vinylacetat, 59.2 Gew.-% (71.5 mol-%) Vinylalkohol, 32.9 Gew.-% (23.6 mol-%) PDMS.

### Beispiel i) (16.26 Gew.-% Silikon):

In einem 120 Liter Rührkessel (drucklos) mit Rückflußkühler, Dosiereinrichtungen und einem Ankerrührer wurden 21.0 kg einer 48.0 %-igen Polymerlösung des Harzes aus Beispiel d) in Methanol vorgelegt und auf einen FG von 20.8 % mit Methanol verdünnt. Diese Lösung wurde dann auf 35°C aufgeheizt. Anschließend wurden 185 ml 45 %-ige wässrig/methanolische Natronlauge schnell zugegeben. Exakt 10 min nach der Laugenzugabe wurde mit konz. Essigsäure auf einen pH-Wert von 7.6 eingestellt. Um den gefällten Polyvinylalkohol als wässrige Lösung zu erhalten, wurde die Suspension aufgeheizt zum Destillieren und das Destillat wurde sukzessive durch Wasser ersetzt. Dieser Vorgang wurde wiederholt, bis das gesamte Methanol durch Wasser ersetzt worden war.
Wässrige Polyvinylalkohol-Lösung - Analysen:
FG: 8.25 %; SZ: 2.24 mgKOH/g; pH(4 %-ig in Wasser): 6.3; VZ: 126.7 mgKOH/g;
VOC (Methanol): nicht ermittelt
Zusammensetzung laut ¹H-NMR (in DMSO mit Trifluoressigsäure als Shift-Reagenz): 21.35 Gew.-% (13.14 mol-%) Vinylacetat, 62.39 Gew.-% (75.22 mol-%) Vinylalkohol, 16.26 Gew.-% (11.64 mol-%) PDMS.

### Beispiel j) (37.16 Gew.-% Silikon):

In einem 120 Liter Rührkessel (drucklos) mit Rückflußkühler, Dosiereinrichtungen und einem Ankerrührer wurden 20.7 kg einer 48.3 %-igen Polymerlösung des Harzes aus Beispiel e) in Methanol vorgelegt und auf einen FG von 29.2 % mit Methanol verdünnt. Diese Lösung wurde dann auf 35°C aufgeheizt. Anschließend wurden 217 ml 45 %-ige wässrig/methanolische Natronlauge schnell zugegeben. 440 Sekunden nach der Laugenzugabe wurde mit konz. Essigsäure auf einen pH-Wert von 7.7 eingestellt. Um den gefällten Polyvinylalkohol als wässrige Lösung zu erhalten, wurde die Suspension aufgeheizt zum Destillieren und das Destillat wurde sukzessive durch Wasser ersetzt. Dieser Vorgang wurde wiederholt, bis das gesamte Methanol durch Wasser ersetzt worden war.
Wässrige Polyvinylalkohol-Lösung - Analysen:
FG: 12.23 %; SZ: 4.49 mgKOH/g; pH(4 %ig in Wasser): 7.2; VZ: 35.1 mgKOH/g;
Zusammensetzung laut ¹H-NMR (in DMSO mit Trifluoressigsäure als Shift-Reagenz): 4.52 Gew.-% (2.79 mol-%) Vinylacetat, 58.32 Gew.-% (70.53 mol-%) Vinylalkohol, 37.16 Gew.-% (26.68 mol-%) PDMS.

### 3. Herstellung der silikonhaltigen Polyvinylacetale:

### Beispiel 1:

In einem 6 Liter Glasreaktor wurden 930 ml dest. Wasser und 3006 ml einer 8.25 %-igen wässrigen Lösung des silikonhaltigen Polyvinylalkohols aus Beispiel i), Viskosität 1.6 mPas (DIN 53015; Methode nach Höppler; 4 %-ige wässrige Lösung) vorgelegt. Die Vorlage wurde unter Rühren innerhalb einer Stunde auf 0°C abgekühlt. Nun wurden in einem Zeitraum von 5 Minuten 190 ml Butyraldehyd, vorgekühlt auf -4°C, zugegeben. Dann wurden bei einer Innentemperatur von -0.5°C 1114 ml 20 %-ige HCl, vorgekühlt auf -4°C, zugegeben. Die Temperatur stieg dadurch kurzzeitig auf 0.5°C an. Durch Kühlen wurde innerhalb von 30 Minuten eine Temperatur von -3.5°C eingestellt. Während des Abkühlens trübte der zunächst klare Ansatz bei ca. -1.6°C ein, und bereits 5 Minuten nach Beginn der Eintrübung fiel das Produkt aus. Nach 40 Minuten Reaktionszeit bei -3.5°C wurde die Temperatur über einen Zeitraum von 3.0 Stunden auf 15°C erhöht und diese Temperatur für weitere 2 Stunden gehalten. Daraufhin wurde das Produkt filtriert und solange unter fließendem, destilliertem Wasser gewaschen, bis das Filtrat neutral reagierte. Anschließend erfolgte die Trocknung bis zu einem Festgehalt von mindestens 98 %, zunächst bei 22°C, dann bei 30°C im Vakuumtrockenschrank.
Es wurde ein silikonhaltiges Polyvinylbutyral in Form eines weißen Pulvers mit 13.4 Gew.-% (28.2 mol-%) Vinylalkohol-Einheiten, 16.9 Gew.-% (18.2 mol-%) Vinylacetat-Einheiten, 56.5 Gew.-% (37.0 mol-%) Vinylbutyral-Einheiten und 13.2 Gew.-% (16.6 mol-%) Polydimethylsiloxan-Einheiten erhalten (Auswertung mit 1H-NMR in CDCl₃ mit Trifluoressigsäure als Shift-Lösungsmittel).
Die Viskosität (DIN 53015; Methode nach Höppler; 10 %-ige ethanolische Lösung) betrug 3.9 mPas. Die ethanolische Lösung mit dem silikonhaltigen Polyvinylbutyral war einphasig und transparent.
Glasübergangstemperatur (Tg): Tg = 49.2°C.

### Beispiel 2:

In einem 6 Liter Glasreaktor wurden 930 ml dest. Wasser und 3006 ml einer 8.25 %-igen wässrigen Lösung des silikonhaltigen Polyvinylalkohols aus Beispiel i), Viskosität 1.6 mPas (DIN 53015; Methode nach Höppler; 4 %-ige wässrige Lösung) vorgelegt. Die Vorlage wurde unter Rühren innerhalb einer Stunde auf 0°C abgekühlt. Nun wurden in einem Zeitraum von 5 Minuten 190 ml Butyraldehyd, vorgekühlt auf -4°C, zugegeben. Es folgte eine weitere Abkühlung auf eine Innentemperatur von -3.7°C. Bei dieser Temperatur wurden 1114 ml 20 %-ige HCl, vorgekühlt auf -4°C, zugegeben, um die Fällung einzuleiten. Die Temperatur stieg dadurch kurzzeitig auf -2.5°C an. Innerhalb kürzester Zeit wurde wieder auf -3.0°C abgekühlt. Nach 40 Minuten Reaktionszeit bei -3.0°C wurde die Temperatur über einen Zeitraum von 1 Stunde 20 Minuten auf 7.5°C erhöht und diese Temperatur für weitere 2 Stunden gehalten. Daraufhin wurde das ausgefallene Produkt abfiltriert und solange unter fließendem, destilliertem Wasser gewaschen, bis das Filtrat neutral reagierte. Anschließend erfolgte die Trocknung bis zu einem Festgehalt von mindestens 98 %, zunächst bei 22°C, dann bei 30°C im Vakuumtrockenschrank.
Es wurde ein silikonhaltiges Polyvinylbutyral in Form eines weißen Pulvers mit 16.3 Gew.-% (33.0 mol-%) Vinylalkohol-Einheiten, 16.8 Gew.-% (17.3 mol-%) Vinylacetat-Einheiten, 53.3 Gew.-% (33.4 mol-%) Vinylbutyral-Einheiten und 13.6 Gew.-% (16.3 mol-%) Polydimethylsiloxan-Einheiten erhalten (Auswertung mit 1H-NMR in CDCl₃ mit Trifluoressigsäure als Shift-Lösungsmittel).
Die Viskosität (DIN 53015; Methode nach Höppler; 10 %-ige ethanolische Lösung) betrug 4.1 mPas. Die ethanolische Lösung mit dem silikonhaltigen Polyvinylbutyral war einphasig und transparent.
Glasübergangstemperatur (Tg): Tg = 51.6°C.

### Beispiel 3:

In einem 6 Liter Glasreaktor wurden 650 ml dest. Wasser und 3478 ml einer 8.25 %-igen wässrigen Lösung des silikonhaltigen Polyvinylalkohols aus Beispiel i), Viskosität 1.6 mPas (DIN 53015; Methode nach Höppler; 4 %-ige wässrige Lösung) vorgelegt. Mit 120 ml 20 %-iger Salzsäure wurde ein pH-Wert von 1.0 eingestellt. Die Vorlage wurde unter Rühren auf 4.5°C abgekühlt. Nun wurden in einem Zeitraum von 5 Minuten 100 ml Acetaldehyd zugegeben. Die Temperatur stieg dabei auf 6.2°C an. Es folgte anschließend eine Abkühlung auf eine Innentemperatur von 1.0°C. 20 Minuten nach Zugabe des Acetaldehyds wurden bei 1.0°C 128 ml Butyraldehyd zugegeben. Dabei stieg die Temperatur auf 3.0°C an. Es wurde wieder auf 1.0°C abgekühlt und die Fällung wurde durch Zugabe von 706 ml 20 %iger HCl eingeleitet. Dabei stieg die Temperatur auf 5°C an und das Produkt fiel aus. Die Suspension wurde auf 4.0°C abgekühlt. Nach 40 Minuten Reaktionszeit bei 4.0°C wurde die Temperatur über einen Zeitraum von 3 Stunden auf 18°C erhöht und diese Temperatur für weitere 2 Stunden gehalten. Daraufhin wurde das Produkt filtriert und solange unter fließendem, destilliertem Wasser gewaschen, bis das Filtrat neutral reagierte. Anschließend erfolgte die Trocknung bis zu einem Festgehalt von mindestens 98 %, zunächst bei 22°C, dann bei 30°C im Vakuumtrockenschrank.
Es wurde ein silikonhaltiges, gemischtes Polyvinylacetal in Form eines weißen Pulvers mit 12.0 Gew.-% (24.4 mol-%) Vinylalkohol-Einheiten, 18.3 Gew.-% (19.0 mol-%) Vinylacetat-Einheiten, 54.8 Gew.-% (38.7 mol-%) Vinylacetal-Einheiten und 14.9 Gew.-% (17.9 mol-%) Polydimethylsiloxan-Einheiten erhalten (Auswertung mit 1H-NMR in CDCl₃ mit Trifluoressigsäure als Shift-Lösungsmittel).
Die Viskosität (DIN 53015; Methode nach Höppler; 10 %-ige ethanolische Lösung) betrug 3.6 mPas. Die ethanolische Lösung mit dem silikonhaltigen Polyvinylacetal war einphasig und zeigte eine ganz leichte kolloidale Trübung (fast transparent).
Glasübergangstemperatur (Tg): Tg = 63.4°C.

### Beispiel 4:

In einem 6 Liter Glasreaktor wurden 1670 ml dest. Wasser und 2255 ml einer 11.0 %-igen wässrigen Lösung des silikonhaltigen Polyvinylalkohols aus Beispiel h), Viskosität 1.11 mPas (DIN 53015; Methode nach Höppler; 4 %-ige wässrige Lösung) vorgelegt. Die Vorlage wurde unter Rühren auf 0°C abgekühlt. Nun wurden in einem Zeitraum von 5 Minuten 152 ml Butyraldehyd, vorgekühlt auf -4°C, zugegeben und der Ansatz wurde auf -2.0°C abgekühlt. Bei dieser Temperatur wurden 1114 ml 20 %-ige HCl, vorgekühlt auf -4°C, zugegeben, um die Fällung einzuleiten. Die Temperatur stieg dadurch kurzzeitig auf 1.0°C an. Durch Kühlen wurde innerhalb von 30 Minuten eine Temperatur von - 2.0°C eingestellt. Während des Abkühlens trübte der zunächst klare Ansatz bei ca. -1.4°C ein, und bereits 5 Minuten nach Beginn der Eintrübung fiel das Produkt aus. Nach 40 Minuten Reaktionszeit bei -2.0°C wurde die Temperatur über einen Zeitraum von 3 Stunden auf 15°C erhöht und diese Temperatur für weitere 2 Stunden gehalten. Daraufhin wurde das Produkt filtriert und solange unter fließendem, destilliertem Wasser gewaschen, bis das Filtrat neutral reagierte. Anschließend erfolgte die Trocknung bis zu einem Festgehalt von mindestens 98 %, zunächst bei 22°C, dann bei 30°C im Vakuumtrockenschrank.
Es wurde ein silikonhaltiges Polyvinylbutyral in Form eines weißen Pulvers mit 13.6 Gew.-% (27.7 mol-%) Vinylalkohol-Einheiten, 8.4 Gew.-% (8.7 mol-%) Vinylacetat-Einheiten, 53.1 Gew.-% (33.5 mol-%) Vinylbutyral-Einheiten und 24.9 Gew.-% (30.1 mol-%) Polydimethylsiloxan-Einheiten erhalten (Auswertung mit 1H-NMR in CDCl₃ mit Trifluoressigsäure als Shift-Lösungsmittel).
Die Viskosität (DIN 53015; Methode nach Höppler; 10 %-ige ethanolische Lösung) betrug 2.9 mPas. Die ethanolische Lösung mit dem silikonhaltigen Polyvinylbutyral war einphasig und kolloidal trüb (milchig).
Glasübergangstemperatur (Tg): Tg = 46.9°C.

### Beispiel 5:

In einem 6 Liter Glasreaktor wurden 1670 ml dest. Wasser und 2255 ml einer 11.0 %-igen wässrigen Lösung des silikonhaltigen Polyvinylalkohols aus Beispiel f), Viskosität 1.8 mPas (DIN 53015; Methode nach Höppler; 4 %-ige wässrige Lösung) vorgelegt. Die Vorlage wurde unter Rühren auf 0°C abgekühlt. Nun wurden in einem Zeitraum von 5 Minuten 152 ml Butyraldehyd, vorgekühlt auf -4°C, zugegeben und der Ansatz wurde auf -2.0°C abgekühlt. Bei dieser Temperatur wurden 1114 ml 20 %-ige HCl, vorgekühlt auf -4°C, zugegeben, um die Fällung einzuleiten. Die Temperatur stieg dadurch kurzzeitig auf 1.0°C an. Durch Kühlen wurde innerhalb von 30 Minuten eine Temperatur von - 2.0°C eingestellt. Während des Abkühlens trübte der zunächst klare Ansatz bei ca. 0.5°C ein, und bereits 5 Minuten nach Beginn der Eintrübung fiel das Produkt aus. Nach 40 Minuten Reaktionszeit bei -2.0°C wurde die Temperatur über einen Zeitraum von 3 Stunden auf 15°C erhöht und diese Temperatur für weitere 2 Stunden gehalten. Daraufhin wurde das Produkt filtriert und solange unter fließendem, destilliertem Wasser gewaschen, bis das Filtrat neutral reagierte. Anschließend erfolgte die Trocknung bis zu einem Festgehalt von mindestens 98 %, zunächst bei 22°C, dann bei 30°C im Vakuumtrockenschrank.
Es wurde ein silikonhaltiges Polyvinylbutyral in Form eines weißen Pulvers mit 14.9 Gew.-% (31.1 mol-%) Vinylalkohol-Einheiten, 14.7 Gew.-% (15.7 mol-%) Vinylacetat-Einheiten, 57.8 Gew.-% (37.5 mol-%) Vinylbutyral-Einheiten und 12.6 Gew.-% (15.7 mol-%) Polydimethylsiloxan-Einheiten erhalten (Auswertung mit 1H-NMR in CDCl₃ mit Trifluoressigsäure als Shift-Lösungsmittel).
Die Viskosität (DIN 53015; Methode nach Höppler; 10 %-ige ethanolische Lösung) betrug 3.9 mPas. Die ethanolische Lösung mit dem silikonhaltigen Polyvinylbutyral war einphasig und leicht kolloidal getrübt (fast transparent). Glasübergangstemperatur (Tg): Tg = 50.9°C.

### Beispiel 6:

In einem 6 Liter Glasreaktor wurden 1770 ml dest. Wasser und 2140 ml einer 11.6 %-igen wässrigen Lösung des silikonhaltigen Polyvinylalkohols aus Beispiel g), Viskosität 1.6 mPas (DIN 53015; Methode nach Höppler; 4 %-ige wässrige Lösung) vorgelegt. Die Vorlage wurde unter Rühren auf 0°C abgekühlt. Nun wurden in einem Zeitraum von 5 Minuten 152 ml Butyraldehyd, vorgekühlt auf -4°C, zugegeben und der Ansatz wurde auf -1.0°C abgekühlt. Bei dieser Temperatur wurden 1114 ml 20 %-ige HCl, vorgekühlt auf -4°C, zugegeben, um die Fällung einzuleiten. Die Temperatur stieg dadurch kurzzeitig auf 1.6°C an. Durch Kühlen wurde innerhalb von 30 Minuten eine Temperatur von - 1.0°C eingestellt. Während des Abkühlens trübte der zunächst klare Ansatz bei ca. 0.6°C ein, und bereits 5 Minuten nach Beginn der Eintrübung fiel das Produkt aus. Nach 40 Minuten Reaktionszeit bei -1.0°C wurde die Temperatur über einen Zeitraum von 3.5 Stunden auf 23°C erhöht und diese Temperatur für weitere 2 Stunden gehalten. Daraufhin wurde das Produkt filtriert und solange unter fließendem, destilliertem Wasser gewaschen, bis das Filtrat neutral reagierte. Anschließend erfolgte die Trocknung bis zu einem Festgehalt von mindestens 98 %, zunächst bei 22°C, dann bei 30°C im Vakuumtrockenschrank.
Es wurde ein silikonhaltiges Polyvinylbutyral in Form eines weißen Pulvers mit 12.1 Gew.-% (25.4 mol-%) Vinylalkohol-Einheiten, 12.4 Gew.-% (13.3 mol-%) Vinylacetat-Einheiten, 54.6 Gew.-% (35.4 mol-%) Vinylbutyral-Einheiten und 20.9 Gew.-% (25.9 mol-%) Polydimethylsiloxan-Einheiten erhalten (Auswertung mit 1H-NMR in CDCl₃ mit Trifluoressigsäure als Shift-Lösungsmittel).
Die Viskosität (DIN 53015; Methode nach Höppler; 10 %-ige ethanolische Lösung) betrug 3.4 mPas. Die ethanolische Lösung mit dem silikonhaltigen Polyvinylbutyral war einphasig und kolloidal getrübt (halbtransparent und durchscheinend). Glasübergangstemperatur (Tg): Tg = 46.4°C.

### Beispiel 7:

In einem 6 Liter Glasreaktor wurden 1610 ml dest. Wasser und 2480 ml einer 11.6 %-igen wässrigen Lösung des silikonhaltigen Polyvinylalkohols aus Beispiel g), Viskosität 1.6 mPas (DIN 53015; Methode nach Höppler; 4 %-ige wässrige Lösung) vorgelegt. Mit 120 ml 20 %-iger Salzsäure wurde ein pH-Wert von 1.0 eingestellt. Die Vorlage wurde unter Rühren auf 5.0°C abgekühlt. Nun wurden in einem Zeitraum von 5 Minuten 80 ml Acetaldehyd zugegeben. Die Temperatur stieg dabei auf 6.2°C an. Es folgte anschließend eine Abkühlung auf eine Innentemperatur von 2.0°C. 20 Minuten nach Zugabe des Acetaldehyds wurden bei 2.0°C 102 ml Butyraldehyd zugegeben. Dabei stieg die Temperatur auf 3.2°C an. Es wurde wieder auf 2.0°C abgekühlt und die Fällung wurde durch Zugabe von 706 ml 20 %iger HCl eingeleitet. Dabei stieg die Temperatur auf 5.5°C an und das Produkt fiel aus. Die Suspension wurde auf 4.0°C abgekühlt. Nach 40 Minuten Reaktionszeit bei 4.0°C wurde die Temperatur über einen Zeitraum von 3.5 Stunden auf 25°C erhöht und diese Temperatur für weitere 2 Stunden gehalten. Daraufhin wurde das Produkt filtriert und solange unter fließendem, destilliertem Wasser gewaschen, bis das Filtrat neutral reagierte. Anschließend erfolgte die Trocknung bis zu einem Festgehalt von mindestens 98 %, zunächst bei 22°C, dann bei 30°C im Vakuumtrockenschrank.
Es wurde ein silikonhaltiges, gemischtes Polyvinylacetal in Form eines weißen Pulvers mit 10.2 Gew.-% (20.8 mol-%) Vinylalkohol-Einheiten, 12.9 Gew.-% (13.4 mol-%) Vinylacetat-Einheiten, 54.4 Gew.-% (38.6 mol-%) Vinylacetal-Einheiten und 22.5 Gew.-% (27.2 mol-%) Polydimethylsiloxan-Einheiten erhalten (Auswertung mit 1H-NMR in CDCl₃ mit Trifluoressigsäure als Shift-Lösungsmittel).
Die Viskosität (DIN 53015; Methode nach Höppler; 10 %-ige ethanolische Lösung) betrug 3.4 mPas. Die ethanolische Lösung mit dem silikonhaltigen Polyvinylacetal war einphasig und kolloidal getrübt (halbtransparent und durchscheinend). Glasübergangstemperatur (Tg): Tg = 62.9°C.

### Beispiel 8:

In einem 6 Liter Glasreaktor wurden 1880 ml dest. Wasser und 2035 ml einer 12.2 %-igen wässrigen Lösung des silikonhaltigen Polyvinylalkohols aus Beispiel j), Viskosität 1.15 mPas (DIN 53015; Methode nach Höppler; 4 %-ige wässrige Lösung) vorgelegt. Die Vorlage wurde unter Rühren auf 0°C abgekühlt. Nun wurden in einem Zeitraum von 5 Minuten 152 ml Butyraldehyd, vorgekühlt auf -4°C, zugegeben und der Ansatz wurde auf -2.0°C abgekühlt. Bei dieser Temperatur wurden 1114 ml 20 %-ige HCl, vorgekühlt auf -4°C, zugegeben, um die Fällung einzuleiten. Die Temperatur stieg dadurch kurzzeitig auf 0°C an. Durch Kühlen wurde innerhalb von 30 Minuten eine Temperatur von -2.0°C eingestellt. Während des Abkühlens trübte der zunächst klare Ansatz bei ca. -1.0°C ein, und bereits 5 Minuten nach Beginn der Eintrübung fiel das Produkt aus. Nach 40 Minuten Reaktionszeit bei -2.0°C wurde die Temperatur über einen Zeitraum von 3 Stunden auf 20°C erhöht und diese Temperatur für weitere 2 Stunden gehalten. Daraufhin wurde das Produkt filtriert und solange unter fließendem, destilliertem Wasser gewaschen, bis das Filtrat neutral reagierte. Anschließend erfolgte die Trocknung bis zu einem Festgehalt von mindestens 98 %, zunächst bei 22°C, dann bei 30°C im Vakuumtrockenschrank.
Es wurde ein silikonhaltiges Polyvinylbutyral in Form eines weißen Pulvers mit 13.9 Gew.-% (28.0 mol-%) Vinylalkohol-Einheiten, 4.9 Gew.-% (5.0 mol-%) Vinylacetat-Einheiten, 52.7 Gew.-% (32.9 mol-%) Vinylbutyral-Einheiten und 28.5 Gew.-% (34.1 mol-%) Polydimethylsiloxan-Einheiten erhalten (Auswertung mit 1H-NMR in CDCl₃ mit Trifluoressigsäure als Shift-Lösungsmittel).
Die Viskosität (DIN 53015; Methode nach Höppler; 10 %-ige ethanolische Lösung) betrug 3.7 mPas. Die ethanolische Lösung mit dem silikonhaltigen Polyvinylbutyral war einphasig und kolloidal getrübt (leicht durchscheinend). Glasübergangstemperatur (Tg): Tg = 53.9°C.

### Beispiel 9:

In einem 6 Liter Glasreaktor wurden 1720 ml dest. Wasser und 2350 ml einer 12.2 %-igen wässrigen Lösung des silikonhaltigen Polyvinylalkohols aus Beispiel j), Viskosität 1.15 mPas (DIN 53015; Methode nach Höppler; 4 %-ige wässrige Lösung) vorgelegt. Mit 120 ml 20 %-iger Salzsäure wurde ein pH-Wert von 1.0 eingestellt. Die Vorlage wurde unter Rühren auf 4.0°C abgekühlt. Nun wurden in einem Zeitraum von 5 Minuten 80 ml Acetaldehyd zugegeben. Die Temperatur stieg dabei auf 6.0°C an. Es folgte anschließend eine Abkühlung auf eine Innentemperatur von 2.0°C. 20 Minuten nach Zugabe des Acetaldehyds wurden bei 2.0°C 102 ml Butyraldehyd zugegeben. Dabei stieg die Temperatur auf 3.2°C an. Es wurde wieder auf 2.0°C abgekühlt und die Fällung wurde durch Zugabe von 706 ml 20 %iger HCl eingeleitet. Dabei stieg die Temperatur auf 6.1°C an und das Produkt fiel aus. Die Suspension wurde auf 5.0°C abgekühlt. Nach 40 Minuten Reaktionszeit bei 5.0°C wurde die Temperatur über einen Zeitraum von 3.5 Stunden auf 20°C erhöht und diese Temperatur für weitere 2 Stunden gehalten. Daraufhin wurde das Produkt filtriert und solange unter fließendem, destilliertem Wasser gewaschen, bis das Filtrat neutral reagierte. Anschließend erfolgte die Trocknung bis zu einem Festgehalt von mindestens 98 %, zunächst bei 22°C, dann bei 30°C im Vakuumtrockenschrank.
Es wurde ein silikonhaltiges, gemischtes Polyvinylacetal in Form eines weißen Pulvers mit 12.2 Gew.-% (23.9 mol-%) Vinylalkohol-Einheiten, 5.6 Gew.-% (5.5 mol-%) Vinylacetat-Einheiten, 51.5 Gew.-% (35.0 mol-%) Vinylacetal-Einheiten und 30.7 Gew.-% (35.6 mol-%) Polydimethylsiloxan-Einheiten erhalten (Auswertung mit 1H-NMR in CDCl₃ mit Trifluoressigsäure als Shift-Lösungsmittel).
Die Viskosität (DIN 53015; Methode nach Höppler; 10 %-ige ethanolische Lösung) betrug 3.9 mPas. Die ethanolische Lösung mit dem silikonhaltigen Polyvinylacetal war einphasig und kolloidal getrübt (leicht durchscheinend). Glasübergangstemperatur (Tg): Tg = 70.6°C.

### Vergleichsbeispiel 10:

Ein handelsübliches Polyvinylbutyral (BN 18) der Wacker Polymer Systems mit 80.0 Gew.-% Vinylbutyral-Einheiten, 2.0 Gew.-% Vinylacetat-Einheiten und 18.0 Gew.-% Vinylalkohol-Einheiten mit einer Viskosität (10 %-ig in Ethanol nach DIN 53015, Methode nach Höppler) von 16.2 mPas.

### Anwendungstechnische Prüfung:

Qualitative Bestimmung des Releaseverhaltens bzw. der Trennwirkung bei Beschichtungen, die ein erfindungsgemäßes silikonhaltiges Polyvinylacetal enthalten, mittels Tesa-Test:
Die silikonhaltigen Polyvinylacetale aus den Beispielen 1 bis 9 und das handelsübliche Polyvinylbutyral BN 18 der Wacker Polymer Systems (Vergleichsbeispiel 10) wurden in EtOH mit einer Konzentration von 10 Gew.-% gelöst. Anschließend wurden handelsübliche Glasträger jeweils mit den entsprechenden Lösungen mit Hilfe eines Glasstabs beschichtet (Schichtdicke ca. 40 µm). Auf die getrocknete Beschichtung wurde ein handelsübliches Tesa-Band der Firma Beiersdorf mit einer Breite von 1.5 cm und einer Länge von 5 cm aufgeklebt und mit dem Finger fest auf die Beschichtung gedrückt. Das Tesa-Band wurde danach von der Beschichtung abgezogen. Es wurde der Kraftaufwand ermittelt, der erforderlich ist, um das Tesa-Band von der Beschichtung zu entfernen.
Die Bewertung erfolgt mit dem Schulnotensystem:
1 (sehr gut): Das Tesa-Band läßt sich ohne größeren Kraftaufwand sehr einfach von der Beschichtung entfernen (sehr gute Trennwirkung); Note 6 (ungenügend): Das Tesa-Band läßt sich nur mit einem sehr hohen Kraftaufwand von der Beschichtung abziehen (keine Trennwirkung).

Die Ergebnisse sind in der Tabelle 1 zusammengefasst.

### Bestimmung der Restklebkraft des Tesa-Bands:

Nach dem Abziehen des Tesa-Bands von der Beschichtung wurde geprüft, ob das Tesa-Band noch klebt. In allen Fällen wurde keine Verminderung der Klebrigkeit des Tesa-Bands festgestellt - es klebt stets genau so gut wie anfangs. Das bedeutet, dass von der Beschichtung kein freies Silikon in den Kleber migriert ist, was dessen Klebkraft hätte schädigen können.

**Tabelle 1:**

| Beispiel | Silikongehalt [Gew.-%] | Trennwirkung (Note) |
|---|---|---|
| 1 | 13.2 | 1 |
| 2 | 13.6 | 2-3 |
| 3 | 14.9 | 1 |
| 4 | 24.9 | 1 |
| 5 | 12.6 | 2 |
| 6 | 20.9 | 1 |
| 7 | 22.5 | 1 |
| 8 | 28.5 | 1 |
| 9 | 30.7 | 1 |
| V10 | 0.0 | 6 |

### Tabelle 1 kann folgendes entnommen werden:

Bereits geringe Mengen an Silikon genügen, damit sich bei Beschichtungen mit silikonhaltigen Polyvinylacetalen eine Trennwirkung einstellt. Dies belegt der Vergleich der Beispiele 1 bis 9 (silikonhaltige Polyvinylacetale mit variablem Silikongehalt), bei denen die Trennwirkung im schlechtesten Fall mit der Note 2-3 beurteilt wurde, mit dem Vergleichsbeispiel V10 (handelsübliches Polyvinylbutyral ohne Silikon), bei dem keinerlei Trennwirkung festgestellt werden konnte (Note 6).

Auch bei anderen Testmethoden ergab sich ein grundsätzlicher Unterschied zwischen den erfindungsgemäßen silikonhaltigen Polyvinylacetalen und den herkömmlichen Polyvinylacetalen. So bringen bereits geringe Mengen an Silikonen, die kovalent an Polyvinylacetal-Ketten gebunden sind, neben der Verbesserung der Trennwirkung bei Beschichtungen auch eine Erhöhung der Hydrophobie, was mit dem Wassertropfentest gezeigt wurde. Der Kontaktwinkel eines auf die Beschichtung gesetzten Wassertropfens ist bei Einsatz von silikonhaltigen Polyvinylacetalen (in der Beschichtung) stets deutlich höher als bei herkömmlichen Polyvinylacetalen. Auch die Zeit, bis der Wassertropfen, der auf die Beschichtung gesetzt wurde, verschwunden bzw. aufgesogen ist, ist bei Einsatz von silikonhaltigen Polyvinylacetalen als Beschichtungsmittel deutlich länger als bei Einsatz der herkömmlichen Polyvinylacetale.

Aus den Beispielen geht ferner hervor, dass silikonhaltige Polyvinylacetale - auch wenn diese ein höheres Molekulargewicht haben - sich durch eine sehr niedrige Viskosität in organischen Lösungsmittel wie EtOH auszeichnen. Dies bringt im Vergleich zu den herkömmlichen Polyvinylacetalen deutliche Vorteile hinsichtlich des Einsatzes in Druckfarben mit sich.

## Patentansprüche

1. Silikonhaltige Polyvinylacetale erhältlich mittels
1) Copolymerisation von
a) einem oder mehreren Vinylestern von unverzweigten oder verzweigten Alkylcarbonsäuren mit 1 bis 15 C-Atomen, und
b)einem oder mehreren Silikonmakromeren mit mindestens einer polymerisierbaren Gruppe, und
2) anschließender Verseifung des Copolymers zum silikonhaltigen Polyvinylalkohol, und
3) nachfolgender Acetalisierung des silikonhaltigen Polyvinylalkohols mit einem oder mehreren Aldehyden aus der Gruppe umfassend aliphatische und aromatische Aldehyde mit 1 bis 15 C-Atomen.

2. Silikonhaltige Polyvinylacetale nach Anspruch 1, **dadurch gekennzeichnet, dass** als Vinylester a) ein oder mehrere aus der Gruppe umfassend Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 5 bis 13 C-Atomen eingesetzt werden.

3. Silikonhaltige Polyvinylacetale nach Anspruch 1 oder 2, **dadurch gekennzeichnet, dass** als Silikonmakromer b) ein oder mehrere mit der allgemeinen Formel R¹ₐR₃₋ₐSiO(SiRR¹O)_{b}(SiR₂O)ₙSiR₃₋ₐR¹ₐ eingesetzt werden, wobei R gleich oder verschieden ist, und einen einwertigen, gegebenenfalls substituierten, Alkylrest oder Alkoxyrest mit jeweils 1 bis 18 C-Atomen bedeutet, R¹ eine polymerisierbare Gruppe bedeutet, a 0 oder 1 ist, b 0 bis 10 ist, und n 3 bis 1000 ist, wobei 85 bis 100 Gew.-% der Silikonmakromere mindestens eine polymerisierbare Gruppe enthalten.

4. Silikonhaltige Polyvinylacetale nach Anspruch 1 bis 3, **dadurch gekennzeichnet, dass** als polymerisierbare Gruppen R₁ Alkenylreste mit 2 bis 8 C-Atomen oder Mercaptoalkylgruppen mit 1 bis 6 C-Atomen enthalten sind.

5. Silikonhaltige Polyvinylacetale nach Anspruch 1 bis 4, **dadurch gekennzeichnet, dass** Siliconmakromere mit linearer oder verzweigter Struktur eingesetzt werden, mit R = Methylrest, und mit n ist 3 bis 1000, welche eine oder zwei terminale, polymerisierbare Gruppen enthalten, oder ein oder mehrere kettenständige, polymerisierbare Gruppen enthalten, oder 1 bis 2 terminale und mindestens eine kettenständige, polymerisierbare Gruppen enthalten.

6. Silikonhaltige Polyvinylacetale nach Anspruch 1 bis 5, **dadurch gekennzeichnet, dass** als Siliconmakromere binäre oder ternäre Gemische von linearen oder verzweigten Polydialkylsiloxanen ohne polymerisierbare Gruppe, mit linearen oder verzweigten Polydialkylsiloxanen mit einer und/oder zwei polymerisierbaren Gruppen eingesetzt werden.

7. Silikonhaltige Polyvinylacetale nach Anspruch 1 bis 6, **dadurch gekennzeichnet, dass** ein oder mehrere Silikonmakromere eingesetzt werden, aus der Gruppe α-Monovinyl-Polydimethylsiloxane, α-Mono-(3-acryloxypropyl)-Polydimethylsiloxane, α-Mono-(acryloxymethyl)-Polydimethylsiloxane, α-Mono-(methacryloxymethyl)-Polydimethylsiloxane, α-Mono-(3-methacryloxypropyl)-Polydimethylsiloxane, α,ω-Divinyl-Polydimethylsiloxane, α,ω-Di-(3-acryloxypropyl)-Polydimethylsiloxane, α,ω-Di-(acryloxymethyl)-Polydimethylsiloxane, α,ω-Di-(methacryloxymethyl)-Polydimethylsiloxane, α,ω-Di-(3-methacryloxypropyl)-Polydimethylsiloxane, α-Mono-(3-mercaptopropyl)-Polydimethylsiloxane, α,ω-Di-(3-mercaptopropyl)-Polydimethylsiloxane.

8. Silikonhaltige Polyvinylacetale nach Anspruch 1 bis 7, **dadurch gekennzeichnet, dass** zur Acetalisierung Butyraldehyd, gegebenenfalls im Gemisch mit Acetaldehyd eingesetzt wird.

9. Silikonhaltige Polyvinylacetale nach Anspruch 1 bis 8, mit
0 bis 30 Gew.-% Vinylester-Einheiten,
5 bis 95 Gew.-% Vinylalkohol-Einheiten,
3 bis 94.9 Gew.-%, Vinylacetal-Einheiten, und
mit einem Silikonanteil von 0.1 bis 45 Gew.-%, jeweils bezogen auf das Gesamtgewicht des silikonhaltigen Polyvinylacetals, wobei sich die Angaben in Gew.-% auf 100 Gew.-% aufaddieren.

10. Verfahren zur Herstellung der silikonhaltigen Polyvinylacetale nach Anspruch 1 bis 9 mittels
1) Copolymerisation von
a) einem oder mehreren Vinylestern von unverzweigten oder verzweigten Alkylcarbonsäuren mit 1 bis 15 C-Atomen, und
b)einem oder mehreren Silikonmakromeren mit mindestens einer polymerisierbaren Gruppe, und
2) anschließender Verseifung des Copolymers zum silikonhaltigen Polyvinylalkohol, und
3) nachfolgender Acetalisierung des silikonhaltigen Polyvinylalkohols mit einem oder mehreren Aldehyden aus der Gruppe umfassend aliphatische und aromatische Aldehyde mit 1 bis 15 C-Atomen.

11. Verfahren nach Anspruch 10, **dadurch gekennzeichnet, dass** die Copolymerisation durch Substanzpolymerisation, Suspensionspolymerisation oder durch Polymerisation in organischen Lösungsmitteln erfolgt.

12. Verfahren nach Anspruch 11, **dadurch gekennzeichnet, dass** die Copolymerisation in einem nichtwässrigen, organischen Lösungsmittel, in Gegenwart von Radikalinitiatoren erfolgt, wobei als nichtwässriges Lösungsmittel ein Gemisch aus mindestens zwei nichtwässrigen Lösungsmitteln eingesetzt wird, von denen mindestens ein nichtwässriges Lösungsmittel eine Übertragungskonstante Cₛ zu Vinylacetat von Cₛ > 20 x 10⁻⁴ bei 70°C aufweist.

13. Verfahren nach Anspruch 10 bis 12, **dadurch gekennzeichnet, dass** die Verseifung bis zu einem Hydrolysegrad von 30 bis 100 Mol-% erfolgt.

14. Verwendung der silikonhaltigen Polyvinylacetale nach Anspruch 1 bis 9 in Druckfarbenzusammensetzungen.

15. Verwendung nach Anspruch 14, **dadurch gekennzeichnet, dass** die Druckfarbenzusammensetzung 5 bis 50 Gew.-% Pigmentanteil, 4 bis 40 Gew.-% silikonhaltiges Polyvinylacetal-Bindemittel und Lösungsmittel, sowie gegebenenfalls noch weitere Zusatzstoffe enthält.

16. Verwendung der silikonhaltigen Polyvinylacetale nach Anspruch 1 bis 9 in Verbundsicherheitsglas, Glasverbunden und Scheibenfolien.

17. Verwendung der silikonhaltigen Polyvinylacetale nach Anspruch 1 bis 9 als Schutzkolloide für wässrige Dispersionen, bei der Polymerisation in wässrigem Medium, und bei der Herstellung von in Wasser redispergierbaren Dispersionspulvern.

18. Verwendung der silikonhaltigen Polyvinylacetale nach Anspruch 1 bis 9 als Bindemittel in Lacken auf wässriger Basis oder in Lacken basierend auf organischen Lösungsmitteln.

19. Verwendung der silikonhaltigen Polyvinylacetale nach Anspruch 1 bis 9 als Bindemittel in Korrosionsschutzmitteln.

20. Verwendung der silikonhaltigen Polyvinylacetale nach Anspruch 1 bis 9 als Bindemittel für Keramikpulver und Metallpulver.

21. Verwendung der silikonhaltigen Polyvinylacetale nach Anspruch 1 bis 9 als Bindemittel für die Innenbeschichtung von Dosen.

22. Verwendung der silikonhaltigen Polyvinylacetale nach Ansspruch 1 bis 9 zur Beschichtung von Holz, Metallen, Glas, Kunststoffen und Papier.

23. Verwendung der silikonhaltigen Polyvinylacetale nach Anspruch 1 bis 9 als Trennmittel oder zur Herstellung von Releasebeschichtungen.

24. Verwendung der silikonhaltigen Polyvinylacetale nach Anspruch 1 bis 9 als Hydrophobierungs- und Modifizierungsmittel.

25. Verwendung der silikonhaltigen Polyvinylacetale nach Anspruch 1 bis 9 in kosmetischen Formulierungen.

26. Verwendung der silikonhaltigen Polyvinylacetale nach Anspruch 1 bis 9 zur Textilbeschichtung oder zur Behandlung von Textilien.

27. Verwendung der silikonhaltigen Polyvinylacetale nach Anspruch 1 bis 9 als Additiv im Baubereich für zementäre und nicht zementäre Systeme.

28. Verwendung der silikonhaltigen Polyvinylacetale nach Anspruch 1 bis 9 als Additiv für Antischaum-Formulierungen.

29. Verwendung der silikonhaltigen Polyvinylacetale nach Anspruch 1 bis 9 im Bautenschutz zur Herstellung von witterungsbeständigen Beschichtungen oder Dichtstoffen.

30. Verwendung der silikonhaltigen Polyvinylacetale nach Anspruch 1 bis 9 im Bereich Polish.

## Claims

1. Silicone-containing polyvinyl acetals obtainable by means of
1) copolymerization of
a) one or more vinyl esters of straight-chain or branched alkylcarboxylic acids having 1 to 15 C atoms and
b) one or more silicone macromers having at least one polymerizable group and
2) subsequent hydrolysis of the copolymer to give the silicone-containing polyvinyl alcohol and
3) subsequent acetalation of the silicone-containing polyvinyl alcohol with one or more aldehydes from the group consisting of aliphatic and aromatic aldehydes having 1 to 15 C atoms.

2. Silicone-containing polyvinyl acetals according to claim 1, **characterized in that** the vinyl esters a) used are one or more from the group consisting of vinyl acetate, vinyl propionate, vinyl butyrate, vinyl 2-ethylhexanoate, vinyl laurate, 1-methylvinyl acetate, vinyl pivalate and vinyl esters of α-branched monocarboxylic acids having 5 to 13 C atoms.

3. Silicone-containing polyvinyl acetals according to claim 1 or 2, **characterized in that** the silicone macromers b) used are one or more having the general formula R¹ₐR₃₋ₐSiO(SiRR¹O)_{b}(SiR₂O)ₙSiR₃₋ₐR¹ₐ, R being identical or different and being a monovalent, optionally substituted, alkyl radical or alkoxy radical having in each case 1 to 18 C atoms, R¹ being a polymerizable group, a being 0 or 1, b being from 0 to 10 and n being from 3 to 1000, from 85 to 100% by weight of the silicone macromer containing at least one polymerizable group.

4. Silicone-containing polyvinyl acetals according to any of claims 1 to 3, **characterized in that** alkenyl radicals having 2 to 8 C atoms or mercaptoalkyl groups having 1 to 6 C atoms are present as polymerizable groups R¹.

5. Silicone-containing polyvinyl acetals according to any of claims 1 to 4, **characterized in that** silicone macromers having a linear or branched structure are used, where R = methyl radical, and where n is from 3 to 1000, which contain one or two terminal, polymerizable groups, or contain one or more polymerizable groups in the chain, or contain one or two terminal polymerizable groups and at least one polymerizable group in the chain.

6. Silicone-containing polyvinyl acetals according to any of claims 1 to 5, **characterized in that** the silicone macromers used are binary or ternary mixtures of linear or branched polydialkoxysiloxanes without a polymerizable group, with linear or branched polydialkylsiloxanes having one and/or two polymerizable groups.

7. Silicone-containing polyvinyl acetals according to any of claims 1 to 6, **characterized in that** one or more silicone macromers from the group consisting of α-monovinylpolydimethylsiloxanes, α-mono (3-acryloyloxypropyl)polydimethylsiloxanes, α-mono(acryloyloxymethyl)polydimethylsiloxanes, α-mono(methacryloyloxymethyl)polydimethylsiloxanes, α-mono(3-methacryloyloxypropyl)polydimethylsiloxanes, α,ω-divinylpolydimethylsiloxanes, α,ω-di(3-acryloyloxypropyl)polydimethylsiloxanes, α,ω-di(acryloyloxymethyl)polydimethylsiloxanes, α,ω-di (methacryloyloxymethyl)polydimethylsiloxanes, α,ω-di(3-methacryloyloxypropyl)polydimethylsiloxanes, α-mono(3-mercaptopropyl)polydimethylsiloxanes and α,ω-di(3-mercaptopropyl)polydimethylsiloxanes are used.

8. Silicone-containing polyvinyl acetals according to any of claims 1 to 7, **characterized in that** butyraldehyde, optionally as a mixture with acetaldehyde, is used for the acetalation.

9. Silicone-containing polyvinyl acetals according to any of claims 1 to 8, having
from 0 to 30% by weight of vinyl ester units,
from 5 to 95% by weight of vinyl alcohol units,
from 3 to 94.9% by weight of vinyl acetal units, and
having a silicone content of from 0.1 to 45% by weight, based in each case on the total weight of the silicone-containing polyvinyl acetal, the data in % by weight summing to 100% by weight.

10. Process for the preparation of the silicone-containing polyvinyl acetals according to any of claims 1 to 9 by means of
1) copolymerization of
a) one or more vinyl esters of straight-chain or branched alkylcarboxylic acids having 1 to 15 C atoms and
b) one or more silicone macromers having at least one polymerizable group and
2) subsequent hydrolysis of the copolymer to give the silicone-containing polyvinyl alcohol and
3) subsequent acetalation of the silicone-containing polyvinyl alcohol with one or more aldehydes from the group consisting of aliphatic and aromatic aldehydes having 1 to 15 C atoms.

11. Process according to claim 10, **characterized in that** the copolymerization is effected by mass polymerization, suspension polymerization or polymerization in organic solvents.

12. Process according to claim 11, **characterized in that** the copolymerization is effected in a nonaqueous, organic solvent, in the presence of free radical initiators, the nonaqueous solvent used being a mixture of at least two nonaqueous solvents, at least one of which nonaqueous solvents has a transfer constant Cₛ to vinyl acetate of Cₛ > 20 x 10⁻⁴ at 70°C.

13. Process according to any of claims 10 to 12, **characterized in that** the hydrolysis is effected to a degree of hydrolysis of from 30 to 100 mol%.

14. Use of the silicone-containing polyvinyl acetals according to any of claims 1 to 9 in printing ink compositions.

15. Use according to claim 14, **characterized in that** the printing ink composition contains from 5 to 50% by weight of pigments, from 4 to 40% by weight of silicone-containing polyvinyl acetal binder and solvents, and optionally also further additives.

16. Use of the silicone-containing polyvinyl acetals according to any of claims 1 to 9 in laminated safety glass, glass laminates and window films.

17. Use of the silicone-containing polyvinyl acetals according to any of claims 1 to 9 as protective colloids for aqueous dispersions, in polymerization in an aqueous medium, and in the preparation of dispersion powders redispersible in water.

18. Use of the silicone-containing polyvinyl acetals according to any of claims 1 to 9 as binders in water-based finishes or in finishes based on organic solvents.

19. Use of the silicone-containing polyvinyl acetals according to any of claims 1 to 9 as binders in corrosion inhibitors.

20. Use of the silicone-containing polyvinyl acetals according to any of claims 1 to 9 as binders for ceramic powders and metal powders.

21. Use of the silicone-containing polyvinyl acetals according to any of claims 1 to 9 as binders for the internal coating of cans.

22. Use of the silicone-containing polyvinyl acetals according to any of claims 1 to 9 for the coating of wood, metals, glass, plastics and paper.

23. Use of the silicone-containing polyvinyl acetals according to any of claims 1 to 9 as release agents or for the production of release coatings.

24. Use of the silicone-containing polyvinyl acetals according to any of claims 1 to 9 as water repellents and modifiers.

25. Use of the silicone-containing polyvinyl acetals according to any of claims 1 to 9 in cosmetic formulations.

26. Use of the silicone-containing polyvinyl acetals according to any of claims 1 to 9 for textile coating or for the treatment of textiles.

27. Use of the silicone-containing polyvinyl acetals according to any of claims 1 to 9 as an additive in the building sector for cement-containing and non-cement-containing systems.

28. Use of the silicone-containing polyvinyl acetals according to any of claims 1 to 9 as an additive for antifoam formulations.

29. Use of the silicone-containing polyvinyl acetals according to any of claims 1 to 9 in building protection for the production of weathering-resistant coatings or sealants.

30. Use of the silicone-containing polyvinyl acetals according to any of claims 1 to 9 in the polish sector.

## Revendications

1. Polyvinylacétals à base de silicone que l'on peut obtenir par
1) copolymérisation de
a) un ou plusieurs esters vinyliques d'acides alkylcarboxyliques non ramifiés ou ramifiés comportant de 1 à 15 atomes de C, et
b) un ou plusieurs macromères de silicone comportant au moins un groupe polymérisable, et
2) saponification subséquente du copolymère pour former un poly(alcool vinylique) siliconé, et
3) acétalisation subséquente du poly(alcool vinylique) siliconé avec un ou plusieurs aldéhydes du groupe comprenant des aldéhydes aliphatiques et aromatiques comportant de 1 à 15 atomes de C.

2. Polyvinylacétals à base de silicone suivant la revendication 1, **caractérisé en ce que** l'on utilise en tant qu'esters vinyliques a) un ou plusieurs du groupe comprenant l'acétate de vinyle, le propionate de vinyle, le butyrate de vinyle, le 2-éthylhexanoate de vinyle, le laurate de vinyle, l'acétate de 1-méthylvinyle, le pivalate de vinyle et des esters vinyliques d'acides monocarboxyliques ramifiés en position α et comportant de 5 à 13 atomes de C.

3. Polyvinylacétals à base de silicone suivant la revendication 1 ou 2, **caractérisés en ce que** l'on met en oeuvre en tant que macromère de silicone b) un ou plusieurs composés de la formule générale R¹ₐR₃₋ₐ SiO(SiRR¹O)_{b}(SiR₂O)ₐSiR₃₋ₐR¹a, dans laquelle les R sont identiques ou différents et représentent un radical alkyle ou alcoxy monovalent, éventuellement substitué, comportant à chaque fois de 1 à 18 atomes de C, R¹ représente un groupe polymérisable, a vaut 0 ou 1, b vaut de 0 à 10 et n vaut de 3 à 1000, où de 85 à 100% en poids du macromère de silicone contiennent au moins un groupe polymérisable.

4. Polyvinylacétals à base de silicone suivant les revendications 1 à 3, **caractérisés en ce qu'**en tant que groupes R¹ polymérisables sont contenus des radicaux alcényle comportant de 2 à 8 atomes de C ou des groupes mercaptoalkyle comportant de 1 à 6 atomes de C.

5. Polyvinylacétals à base de silicone suivant les revendications 1 à 4, **caractérisés en ce que** l'on met en oeuvre des macromères de silicone à structure linéaire ou ramifiée, avec R = radical méthyle, et avec n valant de 3 à 1000, qui contiennent un ou deux groupes terminaux polymérisables, ou bien un ou plusieurs groupes polymérisables se trouvant dans la chaîne, ou bien de 1 à 2 groupes polymérisables terminaux et au moins un groupe polymérisable se trouvant dans la chaîne.

6. Polyvinylacétals à base de silicone suivant les revendications 1 à 5, **caractérisés en ce que** l'on met en oeuvre en tant que macromères de silicone des mélanges binaires ou ternaires de polydialkylsiloxanes linéaires ou ramifiés sans groupe polymérisable, avec des polydialkylsiloxanes linéaires ou ramifiés comportant un et / ou deux groupes polymérisables.

7. Polyvinylacétals à base de silicone suivant les revendications 1 à 6, **caractérisés en ce que** l'on met en oeuvre un ou plusieurs macromères de silicone du groupe formé par l'α-monovinylpolydiméthylsiloxane, l'α-mono-(3-acryloxypropyl)-polydiméthylsiloxane, l'α-mono-(acryloxyméthyl)-polydiméthylsiloxane, l'α-mono-(méthacryloxyméthyl)-polydiméthylsiloxane, l'α-mono-(3-méthacryloxypropyl)-polydiméthylsiloxane, l'α,ω-divinyl-polydiméthylsiloxane,l'α,ω-di-(3-acryloxypropyl)-polydiméthylsiloxane, l'α,ω-di-(acryloxyméthyl)-polydiméthylsiloxane, l'(α,ω-di-(méthacryloxyméthyl)-polydiméthylsiloxane, l'α,ω-di-(3-méthacryloxypropyl)-polydiméthylsiloxane, l'α-mono-(3-mercaptopropyl)-polydiméthylsiloxane, l'α,ω-di-(3-mercaptopropyl)-polydiméthylsiloxane.

8. Polyvinylacétals à base de silicone suivant les revendications 1 à 7, **caractérisés en ce que** l'on met en oeuvre pour l'acétalisation du butyraldéhyde, éventuellement en mélange avec de l'acétaldéhyde.

9. Polyvinylacétals à base de silicone suivant les revendications 1 à 8, comprenant de 0 à 30% en poids d'unités ester vinylique, de 5 à 95% en poids d'unités alcool vinylique, de 3 à 94,9% en poids d'unités vinylacétal et comprenant une fraction de silicone de 0,1 à 45% en poids, à chaque fois par rapport au poids total du polyvinylacétal à base de silicone, les indications de pourcentages en poids totalisant 100% en poids.

10. Procédé de préparation des polyvinylacétals à base de silicone suivant les revendications 1 à 9, par
1) copolymérisation de
a) un ou plusieurs esters vinyliques d'acides alkylcarboxyliques non ramifiés ou ramifiés comportant de 1 à 15 atomes de C, et
b) un ou plusieurs macromères de silicone comportant au moins un groupe polymérisable, et
2) saponification subséquente du copolymère pour former un poly(alcool vinylique) siliconé, et
3) acétalisation subséquente du poly(alcool vinylique) siliconé avec un ou plusieurs aldéhydes du groupe comprenant des aldéhydes aliphatiques et aromatiques comportant de 1 à 15 atomes de C.

11. Procédé suivant la revendication 10, **caractérisé en ce que** la copolymérisation se fait par polymérisation dans la masse, polymérisation en suspension ou par polymérisation dans des solvants organiques.

12. Procédé suivant la revendication 11, **caractérisé en ce que** la copolymérisation se fait dans un solvant organique non aqueux, en présence d'amorceurs radicalaires, en mettant en oeuvre en tant que solvant non aqueux un mélange d'au moins deux solvants non aqueux, dont au moins un solvant non aqueux présente une constante de transfert Cₛ à l'acétate de vinyle de Cₛ > 20 x 10⁻⁴ à 70°C.

13. Procédé suivant les revendications 10 à 12, **caractérisé en ce que** la saponification se fait jusqu'à un degré d'hydrolyse de 30 à 100% molaires.

14. Utilisation des polyvinylacétals à base de silicone suivant les revendications 1 à 9 dans des compositions d'encre d'imprimerie.

15. Utilisation suivant la revendication 14, **caractérisée en ce que** la composition d'encre d'imprimerie contient de 5 à 50% en poids de fraction de pigment, de 4 à 40% en poids de liant de polyvinylacétal à base de silicone et un solvant, ainsi qu'éventuellement encore d'autres additifs.

16. Utilisation des polyvinylacétals à base de silicone suivant les revendications 1 à 9 dans du verre de sécurité feuilleté, des composites de verre et des films pour vitres.

17. Utilisation des polyvinylacétals à base de silicone suivant les revendications 1 à 9 en tant que colloïdes protecteurs pour dispersions aqueuses, lors de la polymérisation en milieu aqueux, et dans la préparation de poudres de dispersion redispersibles dans l'eau.

18. Utilisation des polyvinylacétals à base de silicone suivant les revendications 1 à 9 en tant que liants dans des peintures à base aqueuse ou des peintures à base de solvants organiques.

19. Utilisation des polyvinylacétals à base de silicone suivant les revendications 1 à 9 en tant que liants dans des agents de protection contre la corrosion.

20. Utilisation des polyvinylacétals à base de silicone suivant les revendications 1 à 9 en tant que liants pour des poudres céramiques et des poudres métalliques.

21. Utilisation des polyvinylacétals à base de silicone suivant les revendications 1 à 9 en tant que liants pour le revêtement intérieur de boîtes.

22. Utilisation des polyvinylacétals à base de silicone suivant les revendications 1 à 9 pour le revêtement de bois, métaux, verre, matières synthétiques et papiers.

23. Utilisation des polyvinylacétals à base de silicone suivant les revendications 1 à 9 en tant qu'agents de séparation ou pour la préparation de revêtements anti-adhésifs.

24. Utilisation des polyvinylacétals à base de silicone suivant les revendications 1 à 9 en tant qu'agents d'hydrofugation et de modification.

25. Utilisation des polyvinylacétals à base de silicone suivant les revendications 1 à 9 dans des formulations cosmétiques.

26. Utilisation des polyvinylacétals à base de silicone suivant les revendications 1 à 9 pour l'apprêtage de textiles ou pour le traitement de textiles.

27. Utilisation des polyvinylacétals à base de silicone suivant les revendications 1 à 9 en tant qu'additifs dans le domaine de la construction dans des systèmes cimentaires et non cimentaires.

28. Utilisation des polyvinylacétals à base de silicone suivant les revendications 1 à 9 en tant qu'additifs pour des formulations anti-mousse.

29. Utilisation des polyvinylacétals à base de silicone suivant les revendications 1 à 9 dans la protection de bâtiments, pour la préparation de revêtements résistants aux intempéries ou de matériaux d'étanchéité.

30. Utilisation des polyvinylacétals à base de silicone suivant les revendications 1 à 9 dans le domaine des produits lustrants.
